# EUROPÄISCHE PATENTSCHRIFT

(11) **EP 3 084 464 B1**
(45) Veröffentlichungstag und Bekanntmachung des Hinweises auf die Patenterteilung: **03.01.2018**
(21) Anmeldenummer: 14799150.9
(22) Anmeldetag: 14.11.2014
(51) Int. Cl.: G01S 13/22, G01S 7/282, G01S 7/02, G01S 7/285, G01S 13/10, G01S 13/28, G01S 13/30, G01S 13/88, G01S 13/90, G01F 23/284

(54) **PRF-FREQUENZGENERATOR FÜR EIN FÜLLSTANDSMESSGERÄT**
PRF FREQUENCY GENERATOR FOR A FILL STATE MEASURING DEVICE
GÉNÉRATEUR DE FRÉQUENCES PRF POUR APPAREIL DE MESURE DE NIVEAU DE REMPLISSAGE

(30) Priorität: 20.12.2013 DE 102013114735
(43) Veröffentlichungstag der Anmeldung: 26.10.2016
(73) Patentinhaber: Endress + Hauser GmbH + Co. KG, 79689 Maulburg (DE)
(72) Erfinder: GLUTH, Rolf, 89231 Neu-Ulm (DE); MAYER, Winfried, 89290 Buch (DE)
(74) Vertreter: Andres, Angelika Maria
(86) Internationale Anmeldenummer: PCT/EP2014/074653
(87) Internationale Veröffentlichungsnummer: WO 2015/090769

(56) Entgegenhaltungen:
- DE-A1-102009 032 811
- US-A- 6 072 427
- US-A1- 2005 003 785
- US-A1- 2005 168 379
- US-A1- 2007 192 391
- US-A1- 2007 210 955

## Beschreibung

Die Erfindung betrifft einen Frequenzgenerator zum Erzeugen von Pulswiederholfrequenz-Signalen für eine Radarmessvorrichtung, eine Radarmessvorrichtung für Pulskorrelationsradar sowie ein Verfahren zum Erzeugen von Pulswiederholfrequenz-Signalen für eine Radarmessvorrichtung.
In der Prozessautomatisierungstechnik werden vielfach Feldgeräte eingesetzt, die zur Erfassung und/oder Beeinflussung von Prozessvariablen dienen. Beispiele für derartige Feldgeräte sind Füllstandsmessgeräte, Massedurchflussmessgeräte, Druck- und Temperaturmessgeräte etc., die als Sensoren die entsprechenden Prozessvariablen Füllstand, Durchfluss, Druck bzw. Temperatur erfassen.
Eine Vielzahl solcher Feldgeräte wird von der Firma Endress+Hauser hergestellt und vertrieben.
Eine wichtige Klasse von Feldgeräten sind radarbasierte Füllstandsmessgeräte, die auf dem Prinzip des Pulskorrelationsradars basieren. In derartigen Füllstandsmessgeräten wird die Erzeugung von Radarpulsen im Sendepfad durch ein erstes Pulswiederholfrequenz-Signal gesteuert, wohingegen der für die Auswertung des Empfangssignals benötigte Lokaloszillator durch ein zweites Pulswiederholfrequenz-Signal gesteuert wird, dessen Frequenz sich geringfügig von der Frequenz des ersten Pulswiederholfrequenz-Signals unterscheidet.

In den Patentschriften US 6072427, DE 10 2009 032 811 A1, US 2007/0192391 A1 und US 2007/0210955 A1 wird ein Frequenzgenerator für Radar-Anwendungen beschrieben, der zwei in ihrer Frequenz geringfügig unterschiedliche Pulswiederholfrequenz-Signale erzeugt und somit eine hohe Auflösung der Füllstandsmessung ermöglicht.
Die Veröffentlichungsschrift US 2005/0003785 A1 zeigt einen Breitbandsignalgenerator zur Erzeugung von Hohchfrequenzsignalen mit einstellbarem Frequenzabstzand. Hierzu basiert der Breitbandsignalgenerator auf zwei parallel angeordneten Signalzweigen mit jeweils einem DDS-("Direct Digital Synthetesis") Konverter.
Es ist Aufgabe der Erfindung, einen Frequenzgenerator sowie ein Verfahren zur Erzeugung von Pulswiederholfrequenz-Signalen für ein nach dem Pulskorrelationsprinzip arbeitendes Radarmessgerät zur Verfügung zu stellen, der die benötigten Pulswiederholfrequenz-Signale mit hoher Genauigkeit liefert.

Gelöst wird diese Aufgabe durch die in den Ansprüchen 1, 8, 10, 13 und 14 angegebenen Merkmale.

Vorteilhafte Weiterentwicklungen der Erfindung sind in den Unteransprüchen angegeben. Ein Frequenzgenerator entsprechend Ausführungsformen der vorliegenden Erfindung dient zum Erzeugen von zwei in ihrer Frequenz geringfügig unterschiedlichen Pulswiederholfrequenz-Signalen für eine Radarmessvorrichtung, die nach dem Pulskorrelationsprinzip arbeitet. Der Frequenzgenerator umfasst einen Oszillator, der ein Oszillatorsignal erzeugt, einen ersten Signalpfad zum Erzeugen eines ersten Pulswiederholfrequenz-Signals aus dem Oszillatorsignal, und einen zweiten Signalpfad zum Erzeugen eines zweiten Pulswiederholfrequenz-Signals aus dem Oszillatorsignal.

Der erste Signalpfad umfasst einen Frequenzteiler oder einen ersten DDS-Baustein, der dazu ausgelegt ist, ausgehend von dem Oszillatorsignal ein erstes Frequenzsignal zu erzeugen, einen ersten Mischer, der dazu ausgelegt ist, das erste Frequenzsignal oder ein davon abgeleitetes Signal auf ein Zwischenfrequenzband hochzumischen und ein erstes Zwischenfrequenzsignal zu erzeugen, und ein erstes keramisches Bandpassfilter, das dazu ausgelegt ist, eine ausgewählte Frequenzkomponente des ersten Zwischenfrequenzsignals herauszufiltern und ein bandpassgefiltertes erstes Zwischenfrequenzsignal zu erzeugen.

Der zweite Signalpfad umfasst einen zweiten DDS-Baustein, der dazu ausgelegt ist, ausgehend von dem Oszillatorsignal ein zweites Frequenzsignal zu erzeugen, das sich vom ersten Frequenzsignal um einen vorgegebenen Frequenzversatz unterscheidet, einen zweiten Mischer, der dazu ausgelegt ist, das zweite Frequenzsignal oder ein davon abgeleitetes Signal auf ein Zwischenfrequenzband hochzumischen und ein zweites Zwischenfrequenzsignal zu erzeugen, und ein zweites keramisches Bandpassfilter, das dazu ausgelegt ist, eine ausgewählte Frequenzkomponente des zweiten Zwischenfrequenzsignals herauszufiltern und ein bandpassgefiltertes zweites Zwischenfrequenzsignal zu erzeugen.

Durch die Verwendung eines DDS-Bausteins im zweiten Signalpfad lässt sich die Genauigkeit des Frequenzversatzes zwischen dem ersten Frequenzsignal und dem zweiten Frequenzsignal sehr genau einstellen. Damit ein DDS-Baustein aber ein Ausgangssignal von guter Qualität liefert, muss die Taktfrequenz des DDS-Bausteins um mindestens den Faktor 10 höher sein als die Frequenz des vom DDS-Baustein erzeugten Signals. Die Frequenz des ersten und zweiten Frequenzsignals fällt daher vergleichsweise niedrig aus und liegt im Bereich von einigen 100 kHz. Derartige Frequenzen sind zu niedrig, um diese Frequenzsignale unmittelbar als Pulswiederholfrequenz-Signale für Pulskorrelationsmessungen nutzen zu können, da sonst die in der Anwendung erforderlichen Messgeschwindigkeiten nicht erreicht werden könnten.

Deshalb wird vorgeschlagen, das erste Frequenzsignal und das zweite Frequenzsignal mittels Mischern in ein höherfrequentes Zwischenfrequenzband hochzumischen. Daraus ergibt sich der weitere Vorteil, dass in dem Zwischenfrequenzband, auf das die Frequenzsignale hochgemischt werden, keramische Bandpassfilter hoher Güte kostengünstig verfügbar sind, mit denen einzelne Frequenzkomponenten des hochgemischten Zwischenfrequenzsignals herausgefiltert werden können. Aus den so erhaltenen Frequenzkomponenten lassen sich dann die benötigten Pulswiederholfrequenz-Signale für das Pulskorrelationsradar ableiten.

Nachfolgend ist die Erfindung anhand von in der Zeichnung dargestellten Ausführungsbeispielen näher erläutert. Es zeigen:
Fig. 1 ein Blockschaltbild einer Radarmessvorrichtung, die nach dem Prinzip des Pulskorrelationsradars arbeitet;
Fig. 2 die Pulse des Empfangssignals s_{RX} und die Pulse des Lokaloszillatorsignals s_{LO}, wobei das Lokaloszillatorsignal gegenüber dem Empfangssignal einen gewissen Frequenzversatz aufweist;
Fig. 3 den Aufbau eines DDS (Direct Digital Synthesizer)-Bausteins;
Fig. 4 ein Blockschaltbild eines Frequenzgenerators, der ein erstes PRF-Signal für den Radarsendeoszillator und ein zweites PRF-Signal für den Lokaloszillator erzeugt;
Fig. 5A-5F einen Überblick über die verschiedenen Frequenzkomponenten der Signale des Frequenzgenerators von Fig. 4;
Fig. 6 ein weiteres Blockschaltbild eines Frequenzgenerators, der ein erstes PRF-Signal für den Radarsendeoszillator und ein zweites PRF-Signal für den Lokaloszillator erzeugt; und
Fig. 7A-7D einen Überblick über die verschiedenen Frequenzkomponenten der Signale des Frequenzgenerators von Fig. 6.

Bei der Entfernungsmessung nach dem Prinzip des Pulsradars wird von einer Radarmessvorrichtung ein pulsförmiges Radarsignal ausgesandt. Dieses pulsförmige Radarsignal wird an einem Radarziel zur Radarmessvorrichtung zurück reflektiert und dort ausgewertet. Aus dem zeitlichen Versatz zwischen dem ausgesendeten Radarpuls und dem empfangenen Radarpuls ergibt sich die Entfernung des Radarziels.

Die Entfernungsmessung mittels Pulsradar eignet sich insbesondere für die Bestimmung des Füllstands eines Mediums in einem Behältnis, beispielsweise in einem Tank. Pulsradar ist daher eine wichtige Technologie im Bereich der Füllstandsmessung und kommt in vielen Messgeräten zum Einsatz. Viele Feldgeräte im Bereich der Füllstandsmessung funktionieren nach dem Prinzip des Pulsradars.

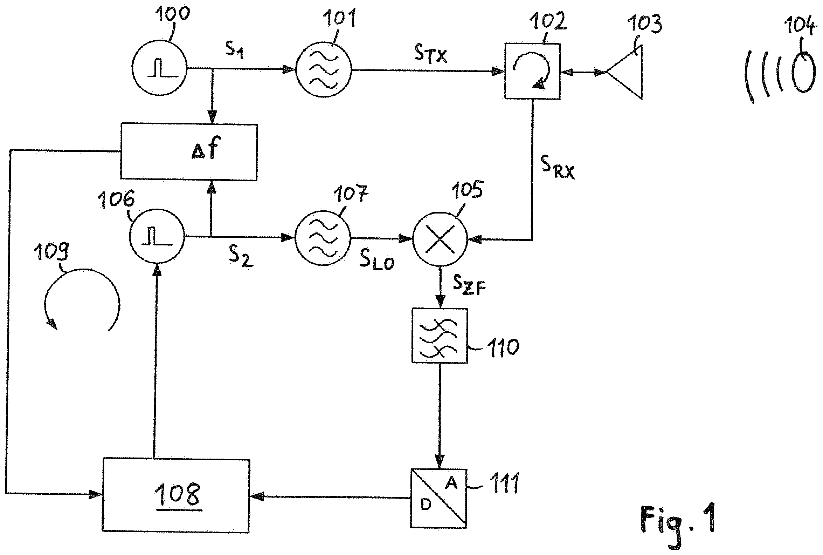

Bei Radarmessvorrichtungen, die nach dem Prinzip des Pulsradars arbeiten, rückt eine Lösung in den Fokus des Interesses, bei der der Radarsendeoszillator und der Lokaloszillator mit geringfügig gegeneinander frequenzverstimmten Pulswiederholfrequenzen betrieben werden. In Fig. 1 ist eine derartige Radarmessvorrichtung gezeigt, die nach dem Prinzip des Pulskorrelationsradars arbeitet und zwei in ihrer Frequenz geringfügig gegeneinander verstimmte Oszillatoren umfasst. Im Sendepfad wird die Pulswiederholfrequenz durch den PRF-Generator 100 vorgegeben. Die Abkürzung "PRF" steht für "Pulse Repetition Frequency", also für Pulswiederholfrequenz. Der PRF-Generator 100 erzeugt eine Folge von Rechteckpulsen mit einer Frequenz von ca. 1,8 bis 2 MHz. Das so erzeugte erste PRF-Signal s₁ dient zur Steuerung des Radarsendeoszillators 101, der das eigentliche Radarsignal bei einer Radarfrequenz von beispielsweise 26 GHz erzeugt. Der Radarsendeoszillator 101 wird entsprechend dem ersten PRF-Signal s₁ ein- und ausgeschaltet, und auf diese Weise erhält man das gepulste Radarsignal s_{TX}. Das gepulste Radarsignal s_{TX} wird über die Sende-/Empfangsweiche 102 der Antenne 103 zugeführt und durch die Antenne 103 abgestrahlt. Die von der Antenne 103 abgestrahlte Folge von Radarpulsen wird an einem Radarziel 104 reflektiert, und die zurück reflektierten Radarpulse werden wiederum von der Antenne 103 empfangen. Über die Sende-/Empfangsweiche 102 wird das gepulste Radarempfangssignal s_{RX} dem Empfangsmischer 105 zugeführt. Infolge der Signallaufzeit von der Antenne 103 zum Radarziel 104 und zurück zur Antenne 103 weisen die Radarpulse des Radarempfangssignals s_{RX} eine gewisse Zeitverzögerung gegenüber den Pulsen des Radarsendesignals s_{TX} auf.

Zur Bestimmung dieser für die Zielentfernung charakteristischen Zeitverzögerung wird das gepulste Radarempfangssignal s_{RX} im Empfangsmischer 105 mit einem gepulsten Lokaloszillatorsignal s_{LO} gemischt. Die Pulswiederholfrequenz f₂ des gepulsten Lokaloszillatorsignals s_{LO} wird durch das vom PRF-Generator 106 erzeugte zweite PRF-Signal s₂ vorgegeben. Der Lokaloszillator 107 erzeugt das entsprechend dem zweiten PRF-Signal s₂ gepulste Lokaloszillatorsignal s_{LO}, das dem Empfangsmischer 105 zugeführt wird. Dabei unterscheidet sich die Pulswiederholfrequenz f₂ des zweiten PRF-Signals s₂ geringfügig von der Pulswiederholfrequenz f₁ des ersten PRF-Signals s₁. Der PRF-Generator 100 im Sendepfad und der PRF-Generator 106 im Auswertepfad werden so geregelt, dass sich die Pulswiederholfrequenz f₂ des zweiten PRF-Signals s₂ um einen vorgegebenen geringfügigen Frequenzversatz Δf von der Pulswiederholfrequenz f₁ des ersten PRF-Signals s₁ unterscheidet. Die Differenzfrequenz Δf wird erfasst und der Steuer-/Regeleinheit 108 zugeführt. In Abhängigkeit von der Differenzfrequenz Δf regelt die Steuer-/Regeleinheit 108 die Frequenz des PRF-Generators 106 so nach, dass ein vorgegebener Frequenzversatz erreicht wird.

Infolge der Differenzfrequenz Δf bewegen sich die Pulse des Lokaloszillatorsignals mit einer gewissen Geschwindigkeit relativ zu den Pulsen des Sendesignals s_{TX} und dementsprechend auch gegenüber den Pulsen des Empfangssignals s_{RX}. Je größer der Frequenzversatz Δf gewählt ist, desto stärker verschieben sich die Pulse des Lokaloszillatorsignals relativ zu den Pulsen von s_{Tx} und s_{RX}. In jeder Taktperiode der Pulswiederholfrequenz f₁ verschiebt sich der Lokaloszillatorpuls um ΔT relativ zum Sendeoszillatorpuls, wobei ΔT von den Pulswiederholfrequenzen f₁ und f₂ wie folgt abhängt: Δ*τ* = |*T*₂ -*T*₁| = |1/*f*₂ -1/*f*₁|. Dabei bezeichnet T₁ eine Taktperiode des Empfangssignals und T₂ eine Taktperiode des Lokaloszillatorsignals.

Die Auswertung des Empfangssignals s_{RX} erfolgt im Empfangsmischer 105. Dort wird das gepulste Empfangssignal s_{RX} mit dem Lokaloszillatorsignal s_{LO} gemischt, und als Ergebnis erhält man am Ausgang des Empfangsmischers 105 das Zwischenfrequenzsignal s_{ZF}. Das Zwischenfrequenzsignal s_{ZF} wird durch ein Zwischenfrequenzfilter 110 gefiltert und anschließend durch einen Analog-/Digital-Wandler 111 in ein Digitalsignal umgewandelt, das der Steuer-/Regeleinheit 108 zur weiteren Auswertung zugeführt wird. Wenn am Empfangsmischer 105 ein Puls des Empfangssignals s_{RX} eintrifft und zeitgleich dazu ein Puls des Lokaloszillatorsignals s_{LO} eintrifft, dann führt dies zu einem entsprechenden Ausschlag im Zwischenfrequenzsignal s_{ZF}. Auf diese Weise kann die zeitliche Position des Pulses im Empfangssignal s_{RX} ermittelt werden.

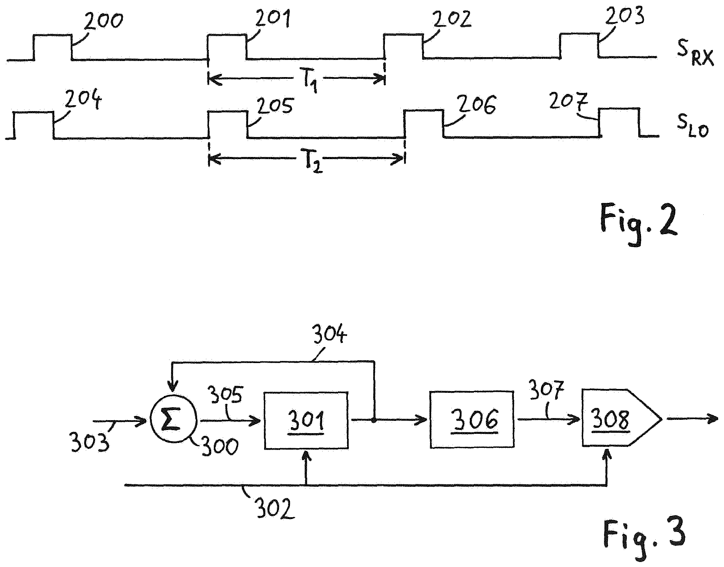

Wie dies geschieht, ist anhand von Fig. 2 dargestellt. Oben in Fig. 2 ist das gepulste Empfangssignal s_{RX} als Funktion der Zeit aufgetragen. Der Abstand der Pulse 200, 201, 202, 203 des Empfangssignals ist durch die Taktperiode T₁=1/f₁ im Sendepfad vorgegeben. Unterhalb des Empfangssignals s_{RX} ist in Fig. 2 das gepulste Lokaloszillatorsignal s_{LO} aufgetragen, das zur Abtastung des gepulsten Empfangssignals s_{RX} verwendet wird. Da die Pulswiederholfrequenz f₂ im Lokaloszillatorpfad etwas kleiner ist als die Pulswiederholfrequenz f₁ im Sendepfad, ist die Taktperiode T₂ des Lokaloszillatorsignals s_{LO} etwas größer als die Taktperiode T₁ des Empfangssignals s_{RX}, und daher verschieben sich die Pulse 204 bis 207 des Lokaloszillatorsignals relativ zu den Pulsen 200 bis 203 des Empfangssignals s_{RX} immer weiter nach rechts. Mit jedem Takt des Lokaloszillatorsignals s_{LO} verschiebt sich der Puls des Lokaloszillatorsignals s_{LO} relativ zu den Pulsen des Empfangssignals s_{RX} um ein Zeitinkrement ΔT weiter nach rechts. Dadurch wird eine Abtastung der zeitlichen Position der Pulse des Empfangssignals s_{RX} ermöglicht.

Infolge der unterschiedlichen Taktperioden von Empfangssignal s_{RX} und Lokaloszillatorsignal s_{LO} kann die zeitliche Position der Empfangspulse sukzessive durch die Lokaloszillatorpulse abgetastet werden. Insofern ermöglicht der Frequenzversatz Δf eine sukzessive Abtastung der zeitlichen Position der Empfangssignalpulse durch die Lokaloszillatorpulse. Die Korrelation der beiden Pulse wird durch das Zwischenfrequenzsignal s_{ZF} angezeigt, das am Ausgang des Empfangsmischers anliegt. Für eine genaue Ermittlung der Lage der Empfangssignalpulse und damit der Laufzeit ist es wichtig, dass der Frequenzversatz Δf sehr klein gewählt ist und mit hoher Genauigkeit eingehalten wird, um so eine fein gerasterte Abtastung der zeitlichen Lage der Empfangspulse zu ermöglichen. Während die Pulswiederholfrequenz für das Sendesignal und das Lokaloszillatorsignal typischerweise im Bereich von etwa 1,8 bis 2 MHz liegt, beträgt der Frequenzunterschied Δf nur etwa 10 Hz. Daraus resultieren hohe Anforderungen an die PRF-Generatoren für das Sendesignal und für das Lokaloszillatorsignal.

Zur Erzeugung der beiden PRF-Signale mit hinreichend hoher Genauigkeit wird vorgeschlagen, bei der Frequenzerzeugung einen oder mehrere Direct Digital Synthesizer (DDS)-Bausteine bei der Frequenzerzeugung einzusetzen. Die direkte digitale Synthese (DDS, Direct Digital Synthesis) ist ein Verfahren der digitalen Signalverarbeitung zur Erzeugung von periodischen Signalen, deren Frequenz mit einer sehr genauen Frequenzauflösung eingestellt werden kann.

In Fig. 3 ist der Aufbau eines DDS-Bausteins schematisch dargestellt. Der DDS-Baustein umfasst einen digitalen Addierer 300 sowie ein Phasenregister 301, in dem der aktuelle Phasenwert gespeichert ist. Der DDS-Baustein wird durch ein Taktsignal 302 getaktet. Im digitalen Addierer 300 wird in jedem Taktschritt ein vorgegebenes Phaseninkrement 303 zu dem aus dem Phasenregister 301 ausgelesenen Phasenwert 304 addiert. Als Ergebnis dieser Addition liefert der digitale Addierer 300 einen neuen Phasenwert 305, der in das Phasenregister 301 geschrieben wird. Der aktuell im Phasenregister 301 gespeicherte Phasenwert entspricht einem Phasenwinkel, und ein Überlaufen des Phasenregisters 301 (automatischer Rücksprung auf 0) entspricht einem vollen Umlauf des Phasenzeigers von 2π. Der zu einem bestimmten Phasenwert gehörende Signalwert wird durch den Phase-zu-Amplitude-Wandler 306 gebildet. Die Umwandlung des Phasenwerts in eine zugehörige Amplitude kann beispielsweise mittels einer ROM-Tabelle durchgeführt oder zur Laufzeit algorithmisch bestimmt werden. Der am Ausgang des Phase-zu-Amplitude-Wandlers 306 erhaltene Signalwert 307 wird durch den Digital-/Analog-Wandler 308 in einen analogen Signalwert umgewandelt. Die Frequenz des so erzeugten DDS-Signals 309 kann bei vorgegebenem Taktsignal 302 durch entsprechende Wahl des Phaseninkrements 303 mit hoher Genauigkeit eingestellt werden.

Bei der digitalen Generierung von Signalen in hoher Frequenzauflösung mittels DDS-Bausteinen entstehen durch Zeit- und Amplitudenquantifizierung Störsignale, die von der Bitbreite der DDS-Funktionsblöcke (z.B. Phasenregister und Digital-/Analog-Wandler) und dem Verhältnis aus Taktfrequenz und gewünschter Ausgangsfrequenz abhängen. Generell gilt, je höher das Verhältnis aus Taktfrequenz und gewünschter Ausgangsfrequenz und je größer die Bitbreite ist, desto kleiner sind die zu erwartenden Störungen, wobei das Frequenzverhältnis der entscheidendere Beitrag ist.

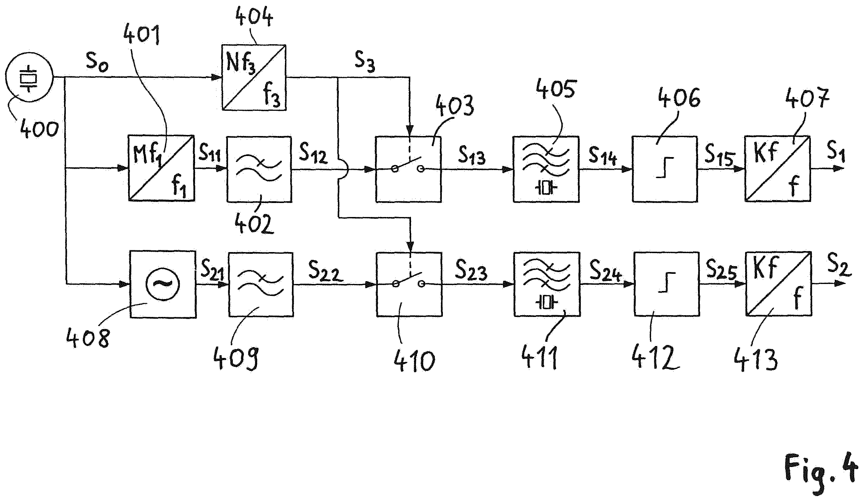

Fig. 4 zeigt einen Frequenzgenerator zur Erzeugung von zwei leicht gegeneinander verstimmten Pulswiederholfrequenzen. Ein derartiger Frequenzgenerator kann beispielsweise in einer Radarmessvorrichtung eingesetzt werden, die nach dem Pulskorrelationsprinzip arbeitet. Der Frequenzgenerator umfasst einen Quarzoszillator 400, der ein Oszillatorsignal s₀ bereitstellt, das als Basis für die Erzeugung der beiden geringfügig gegeneinander frequenzversetzten PRF-Signale dient. Die Frequenz des Oszillatorsignals s₀ kann beispielsweise in der Größenordnung von 25 MHz liegen. Der in Fig. 4 gezeigte Frequenzgenerator umfasst einen ersten Signalpfad zur Erzeugung eines ersten PRF-Signals s₁, welches den gepulsten Betrieb des Sendeoszillators steuert, sowie einen zweiten Signalpfad zur Erzeugung des zweiten PRF-Signals s₂, das den gepulsten Betrieb des Lokaloszillators steuert.

Im ersten Signalpfad wird das Oszillatorsignal s₀ zunächst einem Frequenzteiler 401 zugeführt. Der Frequenzteiler 401 ist dazu ausgelegt, die Frequenz f₀ des Oszillatorsignals s₀ entsprechend einem Teilungsverhältnis M auf eine Frequenz f₁=f₀/M herunterzuteilen. Das am Ausgang des Frequenzteilers 401 erhaltene Signal s₁₁ wird einem Tiefpass 402 zugeführt, dessen Aufgabe es ist, die im Spektrum des Signals s₁₁ enthaltenen harmonischen Frequenzkomponenten wegzufiltern, so dass das am Ausgang des Tiefpasses 402 erhaltene Signal s₁₂ nur mehr Spektralanteile bei der Grundfrequenz f₁ aufweist. Das Signal s₁₂ wird dem Mischer 403 zugeführt, der dazu ausgelegt ist, das Signal s₁₂ in einen Zwischenfrequenzbereich heraufzumischen. Hierzu wird ausgehend vom Oszillatorsignal s₀ mit Hilfe des Frequenzteilers 404 ein geeignetes Mischersignal s₃ erzeugt. Der Frequenzteiler 404 teilt die Frequenz f₀ des Oszillatorsignals s₀ entsprechend einem Teilungsverhältnis N auf eine Frequenz f₃=f₀/N herunter. Das so erhaltene Signal wird dem Mischer 403 als Mischersignal s₃ der Frequenz f₃ zugeführt.
Der Mischer 403 kann beispielsweise als schalterbasierter Zweiseitenbandmischer realisiert sein, wobei die Schalter des Mischers 403 entsprechend der durch das Mischersignal s₃ vorgegebenen Taktfrequenz f₃ geschaltet werden. Die Schalter des Mischers 403 können beispielsweise als CMOS-Schalter realisiert sein. Am Ausgang des Mischers 403 erhält man ein hochgemischtes Signal s₁₃, das Frequenzkomponenten bei den Frequenzen f₃-f₁ und f₃+f₁ enthält. Dieses hochgemischte Signal s₁₃ wird nun einem Bandpassfilter 405 zugeführt, der eine dieser beiden Spektralkomponenten unterdrückt und die andere passieren lässt. Insofern kann durch den schalterbasierten Mischer 403 zusammen mit dem Bandpassfilter 405 mit einfachen Mitteln eine Einseitenbandmischung bewirkt werden.

Bei dem Bandpassfilter 405 handelt es sich vorzugsweise um ein keramisches Bandpassfilter. Derartige Filterbausteine werden beispielsweise für die Rundfunktechnik in hohen Stückzahlen produziert und sind daher bei ausgesuchten Zwischenfrequenzen kostengünstig verfügbar. Wegen der hohen Güte von keramischen Bandpassfiltern eignen sich diese optimal zum Herausfiltern von ausgewählten Frequenzkomponenten. Keramische Bandpassfilter verfügen daher über die notwendige Frequenzselektivität zur Realisierung einer idealen Einseitenbandumsetzung. Vorzugsweise ist der Zwischenfrequenzbereich des in Fig. 4 gezeigten Frequenzgenerators bei so hohen Frequenzen gewählt, dass das Herausfiltern von einzelnen Frequenzkomponenten mit Hilfe der soeben beschriebenen keramischen Filterbausteine erfolgen kann.

Am Ausgang des Bandpassfilters 405 erhält man ein bandpassgefiltertes Signal s₁₄. Dieses Signal, das nur mehr eine einzige Zwischenfrequenzkomponente enthält, wird einem Komparator 406 zugeführt, der das Signal s₁₄ in ein Rechtecksignal s₁₅ umwandelt. Anschließend kann das so erhaltene Rechtecksignal s₁₅ optional noch durch einen abschließenden Frequenzteiler 407 auf eine gewünschte Frequenz heruntergeteilt werden, um so das gewünschte erste PRF-Signal s₁ für die Steuerung der Pulserzeugung des Radarsendeoszillators zu erhalten. Ein derartiger abschließender Frequenzteiler 407 ist jeweils dann erforderlich, wenn sich der Zwischenfrequenzbereich des verwendeten keramischen Bandpassfilters 405 von der Frequenz des gewünschten PRF-Signals s₁ unterscheidet.

Der in Fig. 4 gezeigte Frequenzgenerator umfasst außerdem einen zweiten Signalpfad, dessen Aufgabe es ist, ein relativ zum ersten PRF-Signal s₁ geringfügig frequenzversetztes zweites PRF-Signal s₂ für die Steuerung des Lokaloszillators zu erzeugen. Um den hierfür erforderlichen Frequenzversatz Δf gegenüber dem ersten Signalpfad genau einstellen zu können, umfasst der zweite Signalpfad einen DDS (Direct Digital Synthesis)-Baustein 408, dem das Oszillatorsignal s₀ als Taktsignal zugeführt wird. Der DDS-Baustein 408 ist so konfiguriert, dass er ein Signal s₂₁ erzeugt, dessen Frequenz f₂ sich von der Frequenz f₁ des Signals s₁₁ um einen vorgegebenen geringfügigen Frequenzversatz Δf unterscheidet. Für die Frequenz f₂ des Signals s₂₁ gilt daher |f₂ - f₁| = Δf .

Das vom DDS-Baustein 408 gelieferte Signal s₂₁ wird dem Tiefpassfilter 409 zugeführt, das dazu ausgelegt ist, Harmonische der Grundfrequenz sowie hochfrequente Spiegelfrequenzkomponenten des Signals s₂₁ wegzufiltern. Das so erhaltene tiefpassgefilterte Signal s₂₂ wird anschließend dem Mischer 410 zugeführt, der vorzugsweise wieder als schalterbasierter Mischer realisiert ist. Als Mischersignal wird wieder das vom Frequenzteiler 404 zur Verfügung gestellte Signal s₃ der Frequenz f₃ verwendet. Der Mischer 410 ist dazu ausgelegt, das vergleichsweise niederfrequente Signal s₂₂ in das höherfrequente Zwischenfrequenzband hochzumischen. Das hochgemischte Signal s₂₃ umfasst eine Frequenzkomponente bei der Frequenz f₃-f₂ sowie eine Frequenzkomponente bei der Frequenz f₃+f₂. Durch das Bandpassfilter 411 wird eine dieser beiden Frequenzkomponenten unterdrückt, so dass das Signal s₂₄ am Ausgang des Bandpasses 411 nur mehr eine einzige Frequenzkomponente aufweist. Vorzugsweise ist das Bandpassfilter 411 genau wie das Bandpassfilter 405 als keramisches Bandpassfilter hoher Güte ausgelegt und ermöglicht so ein selektives Herausfiltern einer bestimmten Frequenzkomponente. Das Signal s₂₄ wird durch den Komparator 412 in ein Rechtecksignal s₂₅ umgewandelt. Anschließend wird die Frequenz des Rechtecksignals s₂₅ durch den abschließenden Frequenzteiler 413 so heruntergeteilt, dass das so erzeugte zweite PRF-Signal s₂ als Steuersignal für den gepulsten Betrieb des Lokaloszillators verwendet werden kann.

Im Folgenden soll beispielhaft eine konkrete Auslegung des in Fig. 4 gezeigten Frequenzgenerators beschrieben werden. Der Quarzoszillator 400 kann beispielsweise bei einer Frequenz f₀ = 25 MHz betrieben werden. Dies hat den Vorteil, dass die Stromaufnahme des Quarzoszillators 400 bei dieser Frequenz relativ gering ist. Würde man den Quarzoszillator 400 bei einer höheren Frequenz betreiben, so würde dementsprechend auch die Stromaufnahme ansteigen, was insbesondere bei Feldgeräten zu einer zu hohen Stromaufnahme führen würde. Durch den Frequenzteiler 401 des ersten Signalpfads wird die Oszillatorfrequenz f₀ beispielsweise im Verhältnis M=42 geteilt, so dass man ein heruntergeteiltes Signal s₁₁ mit einer vergleichsweise niedrigen Frequenz f₁=595,238 kHz erhält. Der DDS-Baustein 408 ist so konfiguriert, dass er ein Signal s₂₁ bei einer Frequenz f₂=595,370 kHz erzeugt, die gegenüber f₁ um Δf=132 Hz versetzt ist. Die beiden Frequenzen f₁ und f₂ liegen also sehr eng beieinander. Dadurch, dass die Taktfrequenz f₀ des DDS-Bausteins 408 mindestens um den Faktor 10 größer ist als die Frequenz f₂ des erzeugten Signals s₂₁, treten lediglich geringfügige Störungen bei der Frequenzsynthese auf.

Die beiden Frequenzen f₁=595,238 kHz und f₂=595,370 kHz sind jedoch zu niedrig, um als PRF-Signale verwendet werden zu können. Deshalb werden sie durch die beiden Mischer 403, 410 in ein Zwischenfrequenzband hochgemischt. Das Mischersignal wird vom Frequenzteiler 404 erzeugt, der mit einem Teilungsverhältnis von N=2 arbeitet und das Mischersignal s₃ bei der Frequenz f₃=12,5 MHz liefert. Im ersten Signalpfad wird das Signal s₁₂ bei f₁=595,238 kHz durch das Mischersignal bei f₃=12,5 MHz in das Zwischenfrequenzband hochgemischt, wobei eine erste Frequenzkomponente bei f₃-f₁=11,904762 MHz und eine zweite Frequenzkomponente bei f₃+f₁=13,095238 MHz entsteht. Für diesen Frequenzbereich sind keramische Bandpassfilter verfügbar, die eine hinreichend hohe Güte und Selektivität aufweisen, so dass die erste Frequenzkomponente bei 11,904762 MHz durch ein keramisches Bandpassfilter selektiv herausgefiltert werden kann. Hierzu kann beispielsweise ein keramischer Bandpassfilter mit einer Mittenfrequenz von 12 MHz verwendet werden, dessen Durchlassbandbreite von 11,9 MHz bis 12,1 MHz reicht. Im zweiten Signalpfad wird das Signal s₂₂ bei der Frequenz f₂=595,370 kHz durch das Mischersignal bei f₃=12,5 MHz in den Zwischenfrequenzbereich hochgemischt, wobei Frequenzkomponenten bei f₃-f₂=11,904630 MHz sowie bei f₃+f₂=13,095370 MHz entstehen. Die Frequenzkomponente bei 11,904630 MHz wird durch ein keramisches Bandpassfilter selektiv herausgefiltert, wohingegen die höhere Frequenzkomponente unterdrückt wird. Hierfür kann genau wie im ersten Signalpfad ein keramisches Bandpassfilter mit einer Mittenfrequenz von 12 MHz und einer Durchlassbandbreite von 11,9 MHz bis 12,1 MHz verwendet werden.

Sowohl im ersten Signalpfad als auch im zweiten Signalpfad befindet sich der Zwischenfrequenzbereich bei vergleichsweise hohen Frequenzen von ca. 12 MHz. Die am jeweiligen Ausgang der keramischen Bandpassfilter 405 und 411 erhaltenen Signale s₁₄ und s₂₄ weisen deshalb in der Regel eine zu hohe Frequenz auf, um sie unmittelbar als PRF-Signale zur Steuerung des Sendeoszillators bzw. des Lokaloszillators einsetzen zu können. Insofern ist im ersten Signalpfad nach dem keramischen Bandpassfilter 405 und dem Komparator 406 ein abschließender Frequenzteiler 407 angeordnet, der das Zwischenfrequenzsignal im Teilungsverhältnis K=6 teilt. Dadurch wird das Zwischenfrequenzsignal s₁₅, das eine Frequenz von 11,904762 aufweist, in das gewünschte erste PRF-Signal s₁ umgewandelt, welches eine Frequenz von 1,984127 MHz aufweist. Das so erzeugte erste PRF-Signal s₁ kann unmittelbar zur Steuerung des Pulsbetriebs des Radarsendeoszillators verwendet werden.

Ebenso ist im zweiten Signalpfad hinter dem keramischen Bandpassfilter 411 und dem Komparator 412 ein abschließender Frequenzteiler 413 angeordnet, der das Zwischenfrequenzsignal entsprechend einem Teilungsverhältnis K=6 teilt. Auf diese Weise wird das Zwischenfrequenzsignal s₂₅, das eine Frequenz von 11,904630 MHz aufweist, in das gewünschte zweite PRF-Signal s₂ mit einer Frequenz von 1,984105 MHz umgewandelt. Das so erzeugte PRF-Signal s₂ kann unmittelbar zur Steuerung des Pulsbetriebs des Lokaloszillators verwendet werden.

Bei der soeben beschriebenen Auslegung der Frequenzbereiche des in Fig. 4 gezeigten Frequenzgenerators ergibt sich zwischen dem PRF-Signal s₁ bei der Frequenz 1,984127 MHz und dem PRF-Signal s₂ bei der Frequenz 1,984105 MHz ein Frequenzversatz von Δf=22 Hz. Durch die Verwendung des DDS-Bausteins 408 kann dieser Frequenzversatz von Δf=22 Hz zwischen den Signalen s₁ und s₂ mit hoher Genauigkeit eingehalten werden. Daher eignen sich die PRF-Signale s₁ und s₂ für eine hinreichend genaue Signalauswertung beim Pulskorrelationsradar.

Im Folgenden werden die verschiedenen für die Auslegung des in Fig. 4 gezeigten Frequenzgenerators maßgeblichen Kriterien nochmals zusammengefasst:
1. Die Frequenz f₀ des Quarzoszillators 400 sollte nicht zu hoch gewählt werden, damit die Stromaufnahme des Radarmessgeräts nicht zu hoch wird.
2. Die Taktfrequenz des DDS-Bausteins 408 sollte deutlich höher sein als die Frequenz des Ausgangssignals s₂₁. Vorzugsweise sollte die Taktfrequenz des DDS-Bausteins 408 mindestens zehn mal so hoch sein wie die Frequenz des gewünschten Ausgangssignals s₂₁. Nur dann ist gewährleistet, dass ein hinreichend störungsarmes Ausgangssignal s₂₁ erhalten wird.
3. Aus Punkt 1 und Punkt 2 ergibt sich, dass am Ausgang des DDS-Bausteins 408 ein vergleichsweise niederfrequentes Ausgangssignal s₂₁ mit einer Frequenz von einigen hundert Kilohertz erhalten wird. Das Signal s₂₁ kann daher nicht unmittelbar als PRF-Signal für die Steuerung des Pulsbetriebs eines Radaroszillators verwendet werden, sondern muss zuerst noch in einen höheren Frequenzbereich transformiert werden. Bei der in Fig. 4 gezeigten Ausführungsform geschieht dies mit Hilfe von Mischern 403, 410, welche die Signale s₁₁ und s₂₁ in ein höherfrequentes Zwischenfrequenzband umsetzen.
4. Das Zwischenfrequenzband, auf das die Signale s₁₁ und s₂₁ hochgemischt werden, soll sich vorzugsweise in einem Frequenzbereich befinden, bei dem keramische Bandpassfilter hoher Güte zum Herausfiltern von unerwünschten Frequenzkomponenten vorhanden sind. Vorzugsweise wird ein Zwischenfrequenzband im Frequenzbereich von ca. 10-12 MHz gewählt, da für diesen Frequenzbereich keramische Bandpassfilter hoher Güte verfügbar sind.
5. Die in das Zwischenfrequenzband hochgemischten Signale sind jedoch in der Regel zu hochfrequent, um unmittelbar als PRF-Signale zur Steuerung der Radarpulserzeugung verwendet werden zu können. Deshalb ist es meist notwendig, weitere Frequenzteiler vorzusehen, um die Signale aus dem Zwischenfrequenzband in den für PRF-Signale geeigneten Frequenzbereich herunterzuteilen und auf diese Weise PRF-Signale mit einer gewünschten Frequenz im Bereich von beispielsweise 2 MHz zu erhalten.

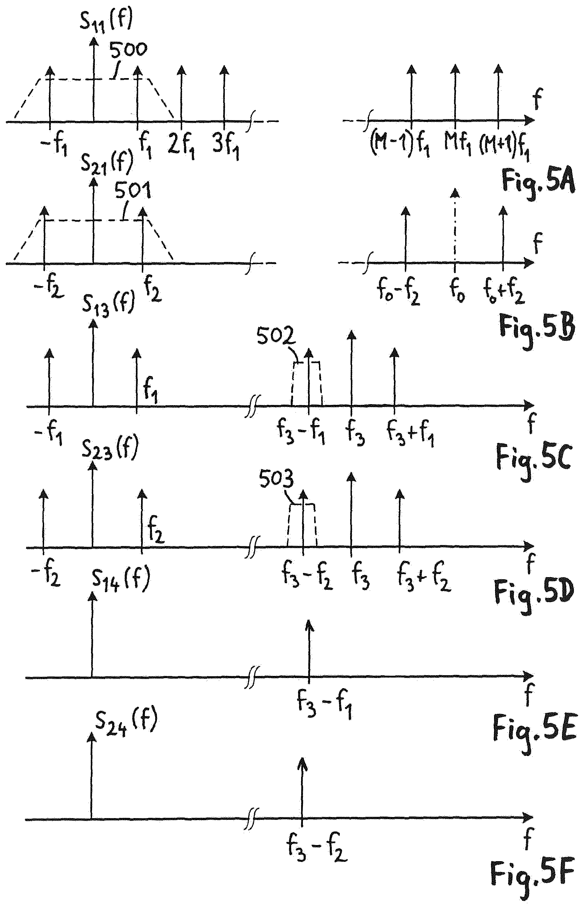

In Fig. 5A bis Fig. 5F sind die im Frequenzgenerator von Fig. 4 auftretenden Signale mit ihren unterschiedlichen Frequenzkomponenten im Überblick dargestellt. Fig. 5A zeigt die Frequenzkomponenten im Signal s₁₁, das am Ausgang des Frequenzteilers 401 anliegt. Das Signal s₁₁ umfasst Frequenzkomponenten bei -f₁ und f₁. Dies rührt daher, dass das reellwertige Signal s₁₁ als Summe zweier komplexwertiger Komponenten bei -f₁ und f₁ darstellbar ist. Darüber hinaus umfasst das Signal s₁₁ harmonische Signalanteile bei 2f₁, 3f₁, ..., (M-1)f₁, Mf₁, (M+1)f₁, ... etc. Durch den in Fig. 4 gezeigten Tiefpass 402 werden diese harmonischen Signalanteile weggefiltert; nur die Frequenzkomponenten bei -f₁ und f₁ werden durchgelassen. In Fig. 5A ist die Filtercharakteristik 500 des Tiefpassfilters 402 gestrichelt eingezeichnet. Am Ausgang des Tiefpassfilters 402 erhält man ein tiefpassgefiltertes Signal s₁₂, das nur mehr die Frequenzkomponenten bei -f₁ und f₁ umfasst.

Fig. 5B zeigt die Frequenzkomponenten des Signals s₂₁, das im zweiten Signalpfad am Ausgang des DDS-Bausteins 408 anliegt. Das Signal s₂₁ umfasst Frequenzkomponenten bei der vom DDS-Baustein 408 erzeugten Frequenz f₂ sowie bei -f₂. Darüber hinaus umfasst das Signal s₂₁ Spiegelfrequenzkomponenten bei f₀-f₂ und f₀+f₂, wobei f₀ die vom Quarzoszillator 400 zur Verfügung gestellte Taktfrequenz bezeichnet, mit der der DDS-Baustein 408 betrieben wird. Das in Fig. 4 gezeigte Tiefpassfilter 409 ist dazu ausgelegt, die Spiegelfrequenzkomponenten bei f₀-f₂ und f₀+f₂ wegzufiltern und lediglich die Signalanteile bei -f₂ und f₂ passieren zu lassen. Die Filtercharakteristik 501 des Tiefpassfilters 409 ist in Fig. 5B gestrichelt eingezeichnet. Am Ausgang des Tiefpassfilters 409 erhält man das Signal s₂₂, das lediglich Signalanteile bei -f₂ und f₂ umfasst.

Anschließend werden die Signale s₁₂ und s₂₂ mittels der Mischerfrequenz f₃ in das Zwischenfrequenzband hochgemischt. Im ersten Signalpfad ist zum Hochmischen des Signals s₁₂ ein Mischer 403 vorgesehen. In Fig. 5C sind die Frequenzkomponenten des Signals s₁₃ dargestellt, das am Ausgang des Mischers 403 erhalten wird. Wie aus Fig. 5C erkennbar ist, enthält das Signal s₁₃ hochgemischte Signalanteile bei f₃-f₁, bei f₃ und bei f₃+f₁. Darüber hinaus umfasst das Signal s₁₃ auch Frequenzkomponenten bei -f₁ und f₁. Im ersten Signalpfad ist das keramische Bandpassfilter 405 vorgesehen, das dazu ausgelegt ist, die Frequenzkomponente bei f₃-f₁ = 11,904762 MHz passieren zu lassen und die restlichen Frequenzkomponenten wegzufiltern. Hierzu ist das keramische Bandpassfilter in Bezug auf seine Mittenfrequenz und seinen Durchlassbereich so ausgelegt, dass es die Frequenzkomponente bei f₃-f₁ durchlässt und alle anderen Frequenzkomponenten ausblendet. Die Filtercharakteristik 502 des hierzu erforderlichen keramischen Bandpassfilters 405 ist in Fig. 5C gestrichelt eingezeichnet. Am Ausgang des keramischen Bandpassfilters 405 erhält man das Signal s₁₄, das lediglich eine einzige Frequenzkomponente bei f₃-f₁ umfasst. Das Signal s₁₄ mit seiner Frequenzkomponente bei f₃-f₁ ist in Fig. 5E gezeigt. Aus diesem Signal s₁₂ kann durch eine weitere Frequenzteilung das gewünschte PRF-Signal s1 für den Radarsendeoszillator abgeleitet werden.

Im zweiten Signalpfad wird das tiefpassgefilterte Signal s₂₂ durch den Mischer 410 in das Zwischenfrequenzband hochgemischt, wobei als Mischersignal wieder das Signal s₃ bei der Frequenz f₃ verwendet wird. In Fig. 5D sind die Frequenzkomponenten des am Ausgang des Mischers 410 erhaltenen Signals s₂₃ gezeigt. Das Signal s₂₃ umfasst hochgemischte Frequenzkomponenten bei f₃-f₂, bei f₃, bei f₃+f₂ sowie bei -f₂ und f₂. Mit Hilfe des keramischen Bandpassfilters 411 wird die Frequenzkomponente bei f₃-f₂ herausgefiltert, wohingegen die restlichen Frequenzkomponenten unterdrückt werden. Die Filtercharakteristik 503 des Bandpassfilters 411 ist in Fig. 5D gestrichelt mit eingezeichnet. Am Ausgang des Bandpassfilters 411 erhält man das Signal s₂₄, das lediglich eine einzige Frequenzkomponente bei der Frequenz f₃-f₂ enthält. Dieses Signal s₂₄ ist in Fig. 5F gezeigt. Aus diesem Signal s₂₄ kann durch eine weitere Frequenzteilung das gewünschte PRF-Signal s₂ für den Lokaloszillator abgeleitet werden.

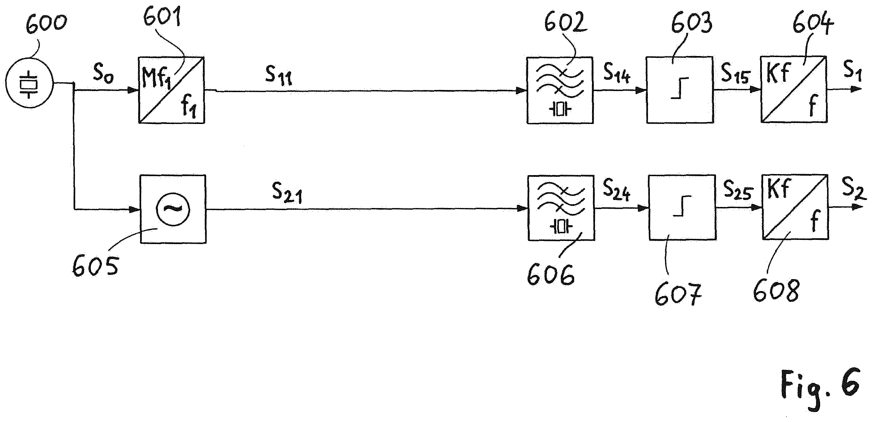

In Fig. 6 ist eine alternative Ausführungsform für einen Frequenzgenerator in Form eines Blockschaltbilds gezeigt. Der in Fig. 6 gezeigte Frequenzgenerator ist ebenfalls in der Lage, ein erstes PRF-Signal s₁ zur Steuerung des gepulsten Betriebs des Sendeoszillators sowie ein gegenüber s₁ leicht frequenzversetztes zweites PRF-Signal s₂ zur Steuerung des gepulsten Betriebs des Lokaloszillators zu erzeugen. Wie der Vergleich zwischen Fig. 6 und Fig. 4 zeigt, kommt der in Fig. 6 gezeigte Frequenzgenerator mit einem deutlich reduzierten Schaltungsaufwand aus. Insbesondere entfallen bei dem in Fig. 6 gezeigten Frequenzgenerator die Mischer 403 und 410 sowie die vorgelagerten Tiefpassfilter 402 und 409.

Der in Fig. 6 gezeigte Frequenzgenerator umfasst einen Quarzoszillator 600, der ein Oszillatorsignal s₀ mit einer Frequenz f₀=12,5 MHz zur Verfügung stellt. Diese Oszillatorfrequenz f₀=12,5 MHz unterscheidet sich deshalb von der in Fig. 4 verwendeten Oszillatorfrequenz, weil bei der in Fig. 6 gezeigten Ausführungsform die verwendete Oszillatorfrequenz auf den Durchlassbereich der verfügbaren keramischen Bandpassfilter abgestimmt sein muss. Der erste Signalpfad umfasst einen Frequenzteiler 601, der das Oszillatorsignal s₀ entsprechend einem Teilungsverhältnis M teilt, wobei als Teilungsverhältnis beispielsweise M=21 gewählt werden kann. Am Ausgang des Frequenzteilers 601 erhält man das Signal s₁₁ bei einer Grundfrequenz von beispielsweise 595,238 KHz. Im Unterschied zu Fig. 4 umfasst der in Fig. 6 gezeigte erste Signalpfad weder ein Tiefpassfilter noch einen Mischer, welcher das Signal s₁₁ in das Zwischenfrequenzband hochmischt. Stattdessen wird bei der in Fig. 6 gezeigten Lösung die Tatsache ausgenutzt, dass das Signal s₁₁ zusätzlich zur Grundfrequenz bei beispielsweise 595,238 KHz auch Frequenzkomponenten bei Harmonischen der Grundfrequenz umfasst. Eine dieser hochfrequenten Harmonischen des Signals s₁₁ wird durch das keramische Bandpassfilter 602 herausgefiltert, wohingegen die restlichen Frequenzkomponenten weggefiltert werden. Dadurch erhält man am Ausgang des keramischen Bandpassfilters 602 ein Zwischenfrequenzsignal s₁₄, das nur mehr eine einzige Frequenzkomponente umfasst. Das keramische Bandpassfilter 602 kann beispielsweise dazu ausgelegt sein, die Harmonische bei (M-1)f₁ = 20·f₁ = 11,904762 MHz herauszufiltern. Durch den nachfolgend angeordneten Komparator 603 wird das Zwischenfrequenzsignal s₁₄ in ein Rechtecksignal s₁₅ umgewandelt, welches anschließend mittels des Frequenzteilers 604 in ein erstes PRF-Signal s₁ für den Sendeoszillator umgewandelt wird. Dabei kann das Teilungsverhältnis K des Frequenzteilers 604 beispielsweise zu K=6 gewählt werden, so dass man das erste PRF-Signal s₁ bei einer Frequenz von 1,984127 MHz erhält.

Der zweite Signalpfad des in Fig. 6 gezeigten Frequenzgenerators umfasst einen DDS-Baustein 605, dem das Oszillatorsignal s₀ als Taktsignal zugeführt wird. Der DDS-Baustein 605 ist so konfiguriert, dass er ein Ausgangssignal s₂₁ bei einer Frequenz von beispielsweise 595,370 KHz erzeugt, welches gegenüber dem Signal s₁₁ einen Frequenzversatz von 132 Hz aufweist. Da die Frequenz des Oszillatorsignals f₀=12,5 MHz beträgt und somit deutlich höher ist als die Frequenz des Signals s₂₁, kann das Signal s₂₁ vom DDS-Baustein 605 mit hoher Genauigkeit und geringen Störungen erzeugt werden. Um das Signal s₂₁ in den Zwischenfrequenzbereich anzuheben, macht man sich zunutze, dass das Signal s₂₁ zusätzlich zur Grundfrequenz f₂= 595,370 KHz auch höherfrequente Spiegelfrequenzkomponenten bei f₀-f₂ und f₀+f₂ aufweist. Mit Hilfe des keramischen Bandpassfilters 606 wird nun eine dieser beiden Spiegelfrequenzkomponenten durchgelassen, beispielsweise die Spiegelfrequenzkomponente bei f₀-f₂ = 11,904630 MHz. Die restlichen Frequenzkomponenten des Signals s₂₁ werden weggefiltert. Das am Ausgang des keramischen Bandpassfilters 606 erhaltene Zwischenfrequenzsignal s₂₄ enthält daher lediglich eine einzige Frequenzkomponente bei f₀-f₂. Durch den Komparator 607 wird das Zwischenfrequenzsignal s₂₄ in ein Rechtecksignal s₂₅ umgewandelt. Anschließend wird die Frequenz des Rechtecksignals s₂₅ durch den Frequenzteiler 608 im Verhältnis von beispielsweise K=6 geteilt, um so das gewünschte zweite PRF-Signal s₂ bei einer Frequenz von 1,984105 MHz zu erhalten. Insofern ergibt sich zwischen den PRF-Signalen s₁ und s₂ ein Frequenzversatz Δf von 22 Hz. Während das erste PRF-Signal s₁ den gepulsten Betrieb des Radarsendeoszillators steuert, dient das zweite PRF-Signal s₂ zur Steuerung des Lokaloszillators.

Bei der in Fig. 6 gezeigten Ausführungsform unterscheidet sich die Oszillatorfrequenz f₀ von 12,5 MHz lediglich um ca. 595 kHz von der Mittenfrequenz des keramischen Bandpassfilters. Insofern ergibt sich bei der in Fig. 6 gezeigten Ausführungsform ein relativ starrer Zusammenhang zwischen der Oszillatorfrequenz einerseits und dem Durchlassbereich des keramischen Bandpassfilters andererseits. Die Oszillatorfrequenz muss auf den Durchlassbereich des keramischen Bandpassfilters abgestimmt sein. Wenn die Oszillatorfrequenz, die sich bei einer derartigen Auslegung ergibt, zu niedrig erscheint, besteht jedoch die Möglichkeit, zwischen dem Oszillator 600 und dem DDS-Baustein 605 einen zusätzlichen Frequenzteiler vorzusehen, der die Oszillatorfrequenz in einem vorgegebenen Verhältnis teilt. In diesem Fall kann als Oszillatorfrequenz ein Vielfaches der bislang diskutierten 12,5 MHz verwendet werden.

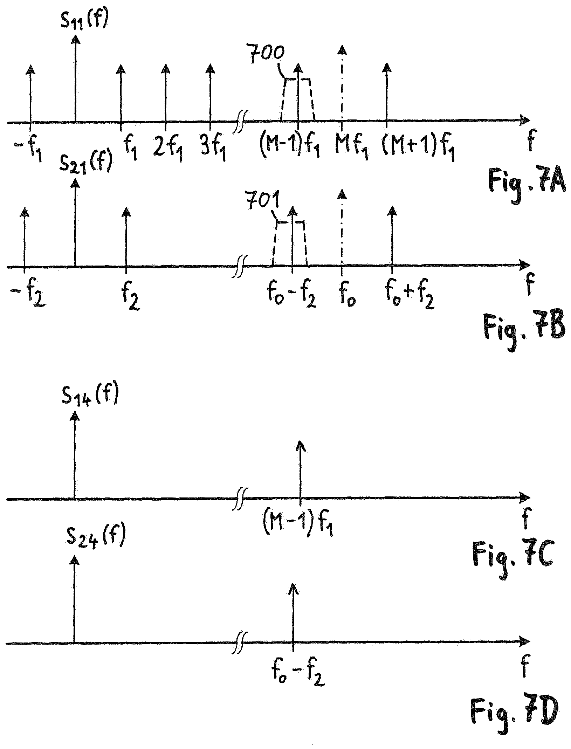

In Fig. 7A bis Fig. 7D sind die im Frequenzgenerator von Fig. 6 auftretenden Signale mit ihren unterschiedlichen Frequenzkomponenten dargestellt. Fig. 7A zeigt die Frequenzkomponenten des am Ausgang des Frequenzteilers 601 erhaltenen Signals s₁₁, welches Frequenzkomponenten f₁ und -f₁ bei der Grundfrequenz f₁ = 595,238 KHz sowie die zugehörigen Harmonischen bei 2f₁, 3f₁, ..., (M-1)f₁, Mf₁, (M+1)f₁, ... etc. umfasst. Mit Hilfe des keramischen Bandpassfilters 602 wird selektiv die Harmonische bei (M-1)f₁ durchgelassen, wohingegen die restlichen Frequenzkomponenten weggefiltert werden. Die Filtercharakteristik 700 des Bandpassfilters 602 ist in Fig. 7A mit eingezeichnet. Am Ausgang des keramischen Bandpassfilters 602 erhält man daher ein Signal s₁₄, das lediglich eine einzige Frequenzkomponente bei der Frequenz (M-1)f₁ umfasst. In Fig. 7C sind die Frequenzkomponenten des Signals s₁₄ dargestellt. Das Signal s₁₄ weist eine einzige Frequenzkomponente bei der Harmonischen (M-1)f₁ = 11,904762 MHz auf.

Fig. 7B zeigt die Frequenzkomponenten des vom DDS-Baustein 605 erzeugten Signals s₂₁. Zu erkennen sind die Signalanteile bei f₂ = 595,370 KHz sowie bei -f₂ sowie die Spiegelfrequenzkomponenten bei f₀-f₂ und f₀+f₂, wobei f₀ die Oszillatorfrequenz von 12,5 MHz bezeichnet. Das keramische Bandpassfilter 606 ist dazu ausgelegt, eine der beiden Spiegelfrequenzkomponenten durchzulassen, beispielsweise die Spiegelfrequenzkomponente bei f₀-f₂ = 11,904630 MHz, und die restlichen Frequenzkomponenten wegzufiltern. Die Filtercharakteristik 701 des keramischen Bandpassfilters 606 ist in Fig. 7B eingezeichnet. Am Ausgang des keramischen Bandpassfilters 606 erhält man daher ein Signal s₂₄, das lediglich eine einzige Frequenzkomponente bei der Frequenz f₀-f₂ umfasst. In Fig. 7D sind die Frequenzkomponenten des Signals s₂₄ dargestellt. Das Signal s₂₄ weist eine einzige Spiegelfrequenzkomponente bei der Frequenz f₀-f₂ = 11,904630 MHz auf.

Die in Fig. 4 und Fig. 6 gezeigten Ausführungsformen von Frequenzgeneratoren umfassen jeweils einen Frequenzteiler im ersten Signalpfad und einen DDS-Baustein im zweiten Signalpfad. Alternativ dazu sind Ausführungsformen denkbar, bei denen sowohl im ersten Signalpfad als auch im zweiten Signalpfad jeweils ein DDS-Baustein eingesetzt wird. In Fig. 4 würde also der Frequenzteiler 401 durch einen DDS-Baustein ersetzt, wobei der DDS-Baustein im ersten Signalpfad und der DDS-Baustein 408 im zweiten Signalpfad dann jeweils leicht gegeneinander frequenzversetzte Signale erzeugen würden. Entsprechend ist es auch bei der in Fig. 6 gezeigten Ausführungsform möglich, in beiden Signalpfaden DDS-Bausteine zu verwenden. Anstelle des Frequenzteilers 601 würde also ein DDS-Baustein verwendet werden, wobei der DDS-Baustein im ersten Signalpfad von Fig. 6 eine Frequenz erzeugen würde, die gegenüber der vom DDS-Baustein 605 erzeugten Frequenz leicht versetzt wäre. Die sonstigen in Fig. 4 und Fig. 6 gezeigten Signalverarbeitungsstufen bleiben unverändert erhalten. Insbesondere könnten auch die von DDS-Bausteinen erzeugten Signale durch Hochsetzen in ein Zwischenfrequenzband und anschließendes Bandpassfiltern mit Hilfe eines keramischen Bandpassfilters weiter verarbeitet werden.

Die Programmierbarkeit des DDS-Bausteins ermöglicht prinzipiell eine Variation des Frequenzunterschieds Δf zwischen dem PRF-Signal s₁ für den Radarsendeoszillator und dem PRF-Signal s₂ für den Lokaloszillator während des Radarbetriebs. Über den Frequenzunterschied Δf kann die Korrelationsgeschwindigkeit variiert werden, mit der die Pulse des Empfangssignals abgetastet werden. Ein kleiner Frequenzunterschied führt zu einer geringen Korrelationsgeschwindigkeit und somit zu einer genaueren Abtastung, während ein größerer Frequenzunterschied eine schnellere und weniger genaue Abtastung der Empfangspulse ermöglicht. Die Veränderung der Korrelationsgeschwindigkeit kann in Abhängigkeit von der jeweiligen Applikation kontinuierlich oder in Stufen, andauernd, zeitweise oder periodisch verändert werden.

Eine vorteilhafte periodische Veränderung wäre das Absenken der Korrelationsgeschwindigkeit während der Aufnahme einer Hüllkurve, so dass sich für Ziele in größerem Abstand eine geringere Korrelationsgeschwindigkeit ergibt als für Ziele in geringerem Abstand. Die von einem ebenen Reflektor zurückreflektierte Empfangsleistung nimmt mit zunehmender Zielentfernung ab. Eine nichtlineare Veränderung der Korrelationsgeschwindigkeit entsprechend der mit der Zielentfernung abnehmenden Empfangsleistung könnte so zur vollständigen oder teilweisen Kompensation der Entfernungsabhängigkeit der Empfangsleistung verwendet werden.

Bei geringer Reflektivität des Füllgutes kann eine kleinere Differenzfrequenz bzw. eine langsamere Korrelationsgeschwindigkeit gewählt werden, die dann zu einer höheren Empfindlichkeit führt. Diese langsamere Korrelationsgeschwindigkeit könnte z.B. auf einen kleinen Entfernungsbereich um das Echo herum begrenzt werden. Beispielsweise könnte die Korrelationsgeschwindigkeit insbesondere in Entfernungsbereichen mit Trennschichten oder Schaumschichten abgesenkt werden. Eine weitere vorteilhafte Anwendung wäre das Erhöhen der Korrelationsgeschwindigkeit und damit das Absenken der Empfindlichkeit in Entfernungsbereichen, an denen starke Störziele vorhanden sind (Clutterreduktion).

Da Veränderungen des Frequenzunterschiedes Δf bzw. der Korrelationsgeschwindigkeit bei ansonsten unveränderten Parametern die Lage und die zeitliche Dauer des von einem punktförmigen Ziels erzeugten Zwischenfrequenzsignals verändern, müsste das Zwischenfrequenzfilter 110 zur Nutzung dieses Freiheitsgrads entweder breiter und damit nicht mehr optimal ausgelegt werden oder elektronisch einstellbar sein. Lösungen für einstellbare Filter können mit modernen Möglichkeiten der Schaltungstechnik zu moderaten Mehrkosten realisiert werden. Beispiele für Lösungsansätze sind Varaktoren in Schwingkreisen oder Resonanzverstärkern, Switched-Capacitor-Architekturen mit Frequenzeinstellung über Stromquellen oder Schaltfrequenzen, digitale Filter mit über Software einstellbaren Koeffizienten oder digitale Filter in Kombination mit variabler Abtastfrequenz. Durch Einsatz eines zweiten DDS-Bausteins anstelle eines festen Frequenzteilers könnte der beschriebene Freiheitsgrad auch bei festem Zwischenfrequenzfilter dadurch genutzt werden, dass die Pulswiederholfrequenz und die Differenzfrequenz gleichzeitig verändert werden, so dass sich wieder die gleiche Zwischenfrequenz ergibt.

## Patentansprüche

1. Frequenzgenerator zum Erzeugen von zwei in ihrer Frequenz geringfügig unterschiedlichen Pulswiederholfrequenz-Signalen für eine Radarmessvorrichtung, die nach dem Pulskorrelationsprinzip arbeitet, wobei der Frequenzgenerator aufweist:
einen Oszillator (400), der ein Oszillatorsignal erzeugt,
einen ersten Signalpfad zum Erzeugen eines ersten Pulswiederholfrequenz-Signals aus dem Oszillatorsignal, und
einen zweiten Signalpfad zum Erzeugen eines zweiten Pulswiederholfrequenz-Signals aus dem Oszillatorsignal,
**dadurch gekennzeichnet, dass**
der erste Signalpfad umfasst:
- einen Frequenzteiler (401) oder einen ersten DDS-Baustein, der dazu ausgelegt ist, ausgehend von dem Oszillatorsignal ein erstes Frequenzsignal zu erzeugen,
- einen ersten Mischer (403), der dazu ausgelegt ist, das erste Frequenzsignal oder ein davon abgeleitetes Signal auf ein Zwischenfrequenzband hochzumischen und ein erstes Zwischenfrequenzsignal zu erzeugen,
- ein erstes keramisches Bandpassfilter (405), das dazu ausgelegt ist, eine ausgewählte Frequenzkomponente des ersten Zwischenfrequenzsignals herauszufiltern und ein bandpassgefiltertes erstes Zwischenfrequenzsignal zu erzeugen,
und dass der zweite Signalpfad umfasst:
- einen zweiten DDS-Baustein (408), der dazu ausgelegt ist, ausgehend von dem Oszillatorsignal ein zweites Frequenzsignal zu erzeugen, das sich vom ersten Frequenzsignal um einen vorgegebenen Frequenzversatz unterscheidet.
- einen zweiten Mischer (410), der dazu ausgelegt ist, das zweite Frequenzsignal oder ein davon abgeleitetes Signal auf ein Zwischenfrequenzband hochzumischen und ein zweites Zwischenfrequenzsignal zu erzeugen,
- ein zweites keramisches Bandpassfilter (411), das dazu ausgelegt ist, eine ausgewählte Frequenzkomponente des zweiten Zwischenfrequenzsignals herauszufiltern und ein bandpassgefiltertes zweites Zwischenfrequenzsignal zu erzeugen.

2. Frequenzgenerator nach Anspruch 1, **gekennzeichnet durch** mindestens eines von folgenden:
- das bandpassgefilterte erste Zwischenfrequenzsignal oder ein davon abgeleitetes Signal ist als erstes Pulswiederholfrequenz-Signal zur Steuerung eines gepulsten Betriebs eines Radarsendeoszillators der Radarmessvorrichtung verwendbar;
- das bandpassgefilterte zweite Zwischenfrequenzsignal oder ein davon abgeleitetes Signal ist als zweites Pulswiederholfrequenz-Signal zur Steuerung eines gepulsten Betriebs eines Lokaloszillators der Radarmessvorrichtung verwendbar.

3. Frequenzgenerator nach Anspruch 1 oder Anspruch 2, **gekennzeichnet durch** mindestens eines von folgenden:
- die Frequenz des Osziflatorsignals liegt unterhalb von 100 MHz;
- die Frequenz des Oszillatorsignals liegt im Bereich von 1 MHz bis 100 MHz;
- das Frequenzverhältnis zwischen dem ersten Frequenzsignal und dem Oszillatorsignal ist kleiner als 1:10;
- das Frequenzverhältnis zwischen dem vom zweiten DDS-Baustein erzeugten zweiten Frequenzsignal und dem Oszillatorsignal ist kleiner als 1:10;
- das erste Frequenzsignal und das zweite Frequenzsignal weisen jeweils eine Frequenz im Bereich von 100 kHz bis 1 MHz auf;
- der Frequenzversatz zwischen dem ersten Frequenzsignal und dem zweiten Frequenzsignal ist mittels des zweiten DDS-Bausteins variabel einstellbar;
- der Frequenzversatz zwischen dem ersten Frequenzsignal und dem zweiten Frequenzsignal ist in Abhängigkeit von Empfangsbedingungen und Radarzielen mittels des zweiten DDS-Bausteins variabel einstellbar;
- der Frequenzversatz zwischen dem ersten Frequenzsignal und dem zweiten Frequenzsignal liegt im Bereich zwischen 5 Hz und einigen 100 Hz;
- das erste Frequenzsignal weist eine Frequenz auf, die so niedrig ist, dass das erste Frequenzsignal nicht unmittelbar als erstes Pulswiederholfrequenz-Signal verwendbar ist;
- das zweite Frequenzsignal weist eine Frequenz auf, die so niedrig ist, dass das zweite Frequenzsignal nicht unmittelbar als zweites Pulswiederholfrequenz-Signal verwendbar ist;
- das erste Pulswiederholfrequenz-Signal weist eine Frequenz im Bereich zwischen 1 MHz und 5 MHz auf;
- das zweite Pulswiederholfrequenz-Signal weist eine Frequenz im Bereich zwischen 1 MHz und 5 MHz auf.

4. Frequenzgenerator nach einem der Ansprüche 1 bis 3, **gekennzeichnet durch** mindestens eines von folgenden:
- der erste Signalpfad umfasst einen ersten Tiefpass, der zwischen dem Frequenzteiler oder dem ersten DDS-Baustein und dem ersten Mischer angeordnet ist und der dazu ausgelegt ist, hochfrequente Störkomponenten des ersten Frequenzsignals zu unterdrücken und ein tiefpassgefiltertes erstes Frequenzsignal zu erzeugen;
- der zweite Signalpfad umfasst einen zweiten Tiefpass, der zwischen dem DDS-Baustein und dem zweiten Mischer angeordnet ist und der dazu ausgelegt ist, hochfrequente Störkomponenten des zweiten Frequenzsignals zu unterdrücken und ein tiefpassgefiltertes zweites Frequenzsignal zu erzeugen.

5. Frequenzgenerator nach einem der Ansprüche 1 bis 4, **gekennzeichnet durch** mindestens eines von folgenden:
- das erste Zwischenfrequenzsignal und das zweite Zwischenfrequenzsignal liegen in einem Zwischenfrequenzband, für das keramische Bandpassfilter hoher Güte verfügbar sind;
- das erste Zwischenfrequenzsignal und das zweite Zwischenfrequenzsignal liegen in einem Zwischenfrequenzband im Bereich von 10 MHz bis 15 MHz;
- das erste Zwischenfrequenzsignal und das zweite Zwischenfrequenzsignal liegen in einem Zwischenfrequenzband, das bei höheren Frequenzen als den Frequenzen des ersten Pulswiederholfrequenz-Signals und des zweiten Pulswiederholfrequenz-Signals liegt;
- die Frequenz des ersten Zwischenfrequenzsignals ist so hoch, dass das erste Zwischenfrequenzsignal nicht unmittelbar als erstes Pulswiederholfrequenz-Signal verwendbar ist;
- die Frequenz des zweiten Zwischenfrequenzsignals ist so hoch, dass das zweite Zwischenfrequenzsignal nicht unmittelbar als zweites Pulswiederholfrequenz-Signal verwendbar ist.

6. Frequenzgenerator nach einem der Ansprüche 1 bis 5, **gekennzeichnet durch** mindestens eines von folgenden:
- das erste keramische Bandpassfilter ist dazu ausgelegt, eine ausgewählte Frequenzkomponente des ersten Zwischenfrequenzsignals passieren zu lassen, alle anderen Frequenzkomponenten des ersten Zwischenfrequenzsignals wegzufiltem und ein bandpassgefiltertes erstes Zwischenfrequenzsignal zu erzeugen;
- das zweite keramische Bandpassfilter ist dazu ausgelegt, eine ausgewählte Frequenzkomponente des zweiten Zwischenfrequenzsignals passieren zu lassen, alle anderen Frequenzkomponenten des zweiten Zwischenfrequenzsignals wegzufiltem und ein bandpassgefiltertes zweites Zwischenfrequenzsignal zu erzeugen;
- das erste keramische Bandpassfilter weist eine Güte auf, die es ermöglicht, selektiv eine ausgewählte Frequenzkomponente des ersten Zwischenfrequenzsignals herauszufiltern;
- das zweite keramische Bandpassfilter weist eine Güte auf, die es ermöglicht, selektiv eine ausgewählte Frequenzkomponente des zweiten Zwischenfrequenzsignals herauszufiltern.

7. Frequenzgenerator nach einem der Ansprüche 1 bis 6, **gekennzeichnet durch** mindestens eines von folgenden:
- der erste Signalpfad umfasst einen ersten abschließenden Frequenzteiler, der nach dem ersten keramischen Bandpassfilter angeordnet ist und der dazu ausgelegt ist, die Frequenz des bandpassgefilterten ersten Zwischenfrequenzsignals oder eines davon abgeleiteten Signals herunterzuteilen und das erste Pulswiederholfrequenz-Signal zu erzeugen;
- der zweite Signalpfad umfasst einen zweiten abschließenden Frequenzteiler, der nach dem zweiten keramischen Bandpassfilter angeordnet ist und der dazu ausgelegt ist, die Frequenz des bandpassgefilterten zweiten Zwischenfrequenzsignals oder eines davon abgeleiteten Signals herunterzuteilen und das zweite Pulswiederholfrequenz-Signa! zu erzeugen.

8. Frequenzgenerator zum Erzeugen von zwei in ihrer Frequenz geringfügig unterschiedlichen Pulswiederholfrequenz-Signalen für eine Radarmessvorrichtung, die nach dem Pulskorrelationsprinzip arbeitet, wobei der Frequenzgenerator aufweist:
einen Oszillator (600), der ein Oszillatorsignal erzeugt,
einen ersten Signalpfad zum Erzeugen eines ersten Pulswiederholfrequenz-Signals aus dem Oszillatorsignal, und
einen zweiten Signalpfad zum Erzeugen eines zweiten Pulswiederholfrequenz-Signals aus dem Oszillatorsignal,
**dadurch gekennzeichnet, dass**
der erste Signalpfad umfasst:
- einen Frequenzteiler (601) oder einen ersten DDS-Baustein, der dazu ausgelegt ist, ausgehend von dem Oszillatorsignal ein erstes Frequenzsignal zu erzeugen, das im Fall des Frequenzteilers (601) eine Mehrzahl von Harmonischen bzw. im Fall des ersten DDS-Bausteins eine Mehrzahl von Spiegelfrequenzkomponenten umfasst,
- ein erstes keramisches Bandpassfilter (602), das dazu ausgelegt ist, eine bestimmte Harmonische bzw. eine bestimmte Spiegelfrequenzkomponente des ersten Frequenzsignals herauszufiltern und ein bandpassgefiltertes erstes Zwischenfrequenzsignal zu erzeugen,
und dass der zweite Signalpfad umfasst:
- einen zweiten DDS-Baustein (605), der dazu ausgelegt ist, ausgehend von dem Oszillatorsignal ein zweites Frequenzsignal zu erzeugen, das sich vom ersten Frequenzsignal um einen vorgegebenen Frequenzversatz unterscheidet, wobei das zweite Frequenzsignal eine Mehrzahl von Spiegelfrequenzkomponenten umfasst,
- ein zweites keramisches Bandpassfilter (606), das dazu ausgelegt ist, eine bestimmte Spiegelfrequenzkomponente des zweiten Frequenzsignals herauszufiltern und ein bandpassgefiltertes zweites Zwischenfrequenzsignal zu erzeugen,

9. Frequenzgenerator nach Anspruch 8, **gekennzeichnet durch** mindestens eines von folgenden:
- das bandpassgefilterte erste Zwischenfrequenzsignal oder ein davon abgeleitetes Signal ist als erstes Pulswiederholfrequenz-Signal zur Steuerung eines gepulsten Betriebs eines Radarsendeoszillators der Radarmessvorrichtung verwendbar,
- das bandpassgefilterte zweite Zwischenfrequenzsignal oder ein davon abgeleitetes Signal ist als zweites Pulswiederholfrequenz-Signal zur Steuerung eines gepulsten Betriebs eines Lokaloszillators der Radarmessvorrichtung verwendbar.

10. Radarmessvorrichtung für Pulskorrelationsradar, welche aufweist
- einen Radarsendepfad zum Aussenden eines Radarsendesignals, das entsprechend einem ersten Pulswiederholfrequenz-Signal pulsmoduliert ist,
- einen Radarempfangspfad zum Empfangen und Auswerten des an einem Ziel (104) reflektierten Radarsendesignals, wobei der Radarempfangspfad einen Empfangsmischer (105) umfasst, der das Radarempfangssignal mit einem Lokaloszillatorsignal mischt, das entsprechend einem zweiten Pulswiederholfrequenz-Signal pulsmoduliert ist, und der ein Empfangsmischer-Ausgangssignal erzeugt,
- einen Frequenzgenerator nach einem der Ansprüche 1 bis 9, der dazu ausgelegt ist, das erste Pulswiederholfrequenz-Signal für einen Radarsendeoszillator (101) und das zweite Pulswiederholfrequenz-Signal für einen Lokaloszillator (107) zu erzeugen, und
- eine Auswerteeinheit (108), die dazu ausgelegt ist, ausgehend vom Empfangsmischer-Ausgangssignal oder einem davon abgeleiteten Signal einen Zielabstand zu ermitteln.

11. Radarmessvorrichtung nach Anspruch 10, **gekennzeichnet durch** mindestens eines von folgenden:
- die Auswerteeinheit ist dazu ausgelegt, den Frequenzunterschied zwischen dem ersten Pulswiederholfrequenz-Signal und dem zweiten Pulswiederholfrequenz-Signal in Abhängigkeit von Umgebungsbedingungen und Radarzielen variabel einzustellen;
- der Frequenzunterschied zwischen dem ersten Pulswiederholfrequenz-Signal und dem zweiten Pulswiederholfrequenz-Signal legt eine Korrelationsgeschwindigkeit für die Auswertung des Radarempfangssignals fest, wobei ein geringer Frequenzunterschied zu einer dementsprechend niedrigen Korrelationsgeschwindigkeit führt;
- die Auswerteeinheit ist dazu ausgelegt, den Frequenzunterschied zwischen dem ersten Pulswiederholfrequenz-Signal und dem zweiten Pulswiederholfrequenz-Signal in Abhängigkeit von der Entfernung eines Radarziels variabel einzustellen, wobei für weiter entfernte Radarziele ein geringerer Frequenzunterschied eingestellt wird als für weniger weit entfernte Radarziele;
- die Auswerteeinheit ist dazu ausgelegt, den Frequenzunterschied zwischen dem ersten Pulswiederholfrequenz-Signal und dem zweiten Pulswiederholfrequenz-Signal in Abhängigkeit von der Reflektivität eines Radarziels variabel einzustellen;
- die Auswerteeinheit ist dazu ausgelegt, den Frequenzunterschied in Abhängigkeit von der Entfernung des Radarziels periodisch durchzustimmen, wobei für weiter entfernte Radarziele ein geringerer Frequenzunterschied eingestellt wird als für weniger weit entfernte Radarziele.

12. Radarmessvorrichtung nach Anspruch 10 oder Anspruch 11, **gekennzeichnet durch** mindestens eines von folgenden:
- bei der Radarmessvorrichtung handelt es sich um ein Gerät zur Entfernungsmessung;
- bei der Radarmessvorrichtung handelt es sich um ein Füllstandsmessgerät, welches dazu ausgelegt ist, den Füllstand in einem Behältnis zu bestimmen;
- bei der Radarmessvorrichtung handelt es sich um ein Feldgerät für die Prozessautomatisierungstechnik.

13. Ein Verfahren zum Erzeugen von zwei in ihrer Frequenz geringfügig unterschiedlichen Pulswiederholfrequenz-Signalen für eine Radarmessvorrichtung, die nach dem Pulskorrelationsprinzip arbeitet, wobei das Verfahren folgende Schritte aufweist:
- Erzeugen eines Oszillatorsignals;
**gekennzeichnet durch**
- Erzeugen eines ersten Frequenzsignals ausgehend von dem Oszillatorsignal mittels eines Frequenzteilers (401) oder eines ersten DDS-Bausteins;
- Hochmischen des ersten Frequenzsignals oder eines davon abgeleiteten Signals auf ein Zwischenfrequenzband und Erzeugen eines ersten Zwischenfrequenzsignals;
- Herausfiltern einer ausgewählten Frequenzkomponente des ersten Zwischenfrequenzsignals mittels eines ersten keramischen Bandpassfilters (405) und Erzeugen eines bandpassgefilterten ersten Zwischenfrequenzsignals, wobei das bandpassgefilterte erste Zwischenfrequenzsignal oder ein davon abgeleitetes Signal als erstes Pulswiederholfrequenz-Signal verwendbar ist;
- Erzeugen eines zweiten Frequenzsignals ausgehend von dem Oszillatorsignal mittels eines zweiten DDS-Bausteins, wobei sich das zweite Frequenzsignal vom ersten Frequenzsignal um einen vorgegebenen Frequenzversatz unterscheidet,
- Hochmischen des zweiten Frequenzsignals oder eines davon abgeleiteten Signals auf ein Zwischenfrequenzband und Erzeugen eines zweiten Zwischenfrequenzsignals;
- Herausfiltern einer ausgewählten Frequenzkomponente des zweiten Zwischenfrequenzsignals mittels eines zweiten keramischen Bandpassfilters (411) und Erzeugen eines bandpassgefilterten zweiten Zwischenfrequenzsignals, wobei das bandpassgefilterte zweite Zwischenfrequenzsignal oder ein davon abgeleitetes Signal als zweites Pulswiederholfrequenz-Signal verwendbar ist.

14. Ein Verfahren zum Erzeugen von zwei in ihrer Frequenz geringfügig unterschiedlichen Pulswiederholfrequenz-Signalen für eine Radarmessvorrichtung, die nach dem Pulskorrelationsprinzip arbeitet, wobei das Verfahren folgende Schritte aufweist:
- Erzeugen eines Oszillatorsignals;
**gekennzeichnet durch**
- Erzeugen eines ersten Frequenzsignals ausgehend von dem Oszillatorsignal mittels eines Frequenzteilers (601) oder eines ersten DDS-Bausteins, wobei das erste Frequenzsignal im Fall des Frequenzteilers (601) eine Mehrzahl von Harmonischen bzw. im Fall des ersten DDS-Bausteins eine Mehrzahl von Spiegelfrequenzkomponenten umfasst;
- Herausfiltern einer bestimmten Harmonischen bzw. einer bestimmten Spiegelfrequenzkomponente des ersten Zwischenfrequenzsignals mittels eines ersten keramischen Bandpassfilters (602) und Erzeugen eines bandpassgefilterten ersten Zwischenfrequenzsignals, wobei das bandpassgefilterte erste Zwischenfrequenzsignal oder ein davon abgeleitetes Signal als erstes Pulswiederholfrequenz-Signal verwendbar ist;
- Erzeugen eines zweiten Frequenzsignals ausgehend von dem Oszillatorsignal mittels eines zweiten DDS-Bausteins (605), wobei sich das zweite Frequenzsignal vom ersten Frequenzsignal um einen vorgegebenen Frequenzversatz unterscheidet, wobei das zweite Frequenzsignal eine Mehrzahl von Spiegelfrequenzkomponenten umfasst;
- Herausfiltern einer bestimmten Spiegelfrequenzkomponente des zweiten Zwischenfrequenzsignals mittels eines zweiten keramischen Bandpassfilters (606) und Erzeugen eines bandpassgefilterten zweiten Zwischenfrequenzsignals, wobei das bandpassgefilterte zweite Zwischenfrequenzsignal oder ein davon abgeleitetes Signal als zweites Pulswiederholfrequenz-Signal verwendbar ist.

## Claims

1. Frequency generator designed to generate two pulse repetition frequency signals, whose frequencies are slightly different, for a radar measuring apparatus which functions according to the pulse correlation principle, wherein said frequency generator has the following elements:
an oscillator (400), which generates an oscillator signal,
a first signal path for generating a first pulse repetition frequency signal from the oscillator signal, and
a second signal path for generating a second pulse repetition frequency signal from the oscillator signal,
**characterized in that**
the first signal path comprises:
- a frequency divider (401) or a first DDS module that is designed to generate a first frequency signal based on the oscillator signal,
- a first mixer (403), which is designed to mix the first frequency signal, or a signal derived therefore, to an intermediate frequency band and to generate a first intermediate frequency signal,
- a first ceramic bandpass filter (405), which is designed to filter out a selected frequency component of the first intermediate frequency signal and to generate a bandpass-filtered first intermediate frequency signal,
and **in that** the second signal path comprises:
- a second DDS module (408), which, based on the oscillator signal, is designed to generate a second frequency signal which differs from the first frequency signal by a predefined frequency offset,
- a second mixer (410), which is designed to mix the second frequency signal, or a signal derived therefore, to an intermediate frequency band and to generate a second intermediate frequency signal,
- a second ceramic bandpass filter (411), which is designed to filter out a selected frequency component of the second intermediate frequency signal and to generate a bandpass-filtered second intermediate frequency signal.

2. Frequency generator as claimed in Claim 1, **characterized by** at least one of the following:
- the bandpass-filtered first intermediate frequency signal, or a signal derived therefrom, can be used as a first pulse repetition frequency signal to control the pulsed operation of a radar transmission oscillator of the radar measuring apparatus;
- the bandpass-filtered second intermediate frequency signal, or a signal derived therefrom, can be used as a second pulse repetition frequency signal to control the pulsed operation of a local oscillator of the radar measuring apparatus.

3. Frequency generator as claimed in Claim 1 or Claim 2, **characterized by** at least one of the following:
- the frequency of the oscillator signal is less than 100 MHz ;
- the frequency of the oscillator signal is in the range from 1 MHz to 100 MHz;
- the frequency ratio between the first frequency signal and the oscillator signal is less than 1:10;
- The frequency ratio between the second frequency signal generated by the DDS module and the oscillator signal is less than 1:10;
- the first frequency signal and the second frequency signal each has a frequency in the range from 100 kHz to 1 MHz ;
- the frequency offset between the first frequency signal and the second frequency signal can be set in a variable manner using the second DDS module ;
- the frequency offset between the first frequency signal and the second frequency signal can be set in a variable manner using the second DDS module depending on reception conditions and radar targets;
- the frequency offset between the first frequency signal and the second frequency signal is in the range between 5 Hz and several 100 Hz;
- the first frequency signal has a frequency that is so low that the first frequency signal cannot be used directly as a first pulse repetition frequency signal;
- the second frequency signal has a frequency that is so low that the second frequency signal cannot be used directly as a second pulse repetition frequency signal;
- the first pulse repetition frequency signal has a frequency in the range from between 1 MHz and 5 MHz ;
- the second pulse repetition frequency signal has a frequency in the range from between 1 MHz and 5 MHz.

4. Frequency generator as claimed in one of the Claims 1 to 3, **characterized by** at least one of the following:
- the first signal path comprises a first low-pass that is arranged between the frequency divider or the first DDS module and the first mixer and is designed to suppress high-frequency interference components of the first frequency signal and to generate a low-pass-filtered first frequency signal;
- the second signal path comprises a second low-pass which is arranged between the DDS module and the second mixer and is designed to suppress high-frequency interference components of the second frequency signal and to generate a low-pass-filtered second frequency signal.

5. Frequency generator as claimed in one of the Claims 1 to 4, **characterized by** at least one of the following:
- the first intermediate frequency signal and the second intermediate frequency signal are in an intermediate frequency band for which high-quality ceramic bandpass filters are available;
- the first intermediate frequency signal and the second intermediate frequency signal are in an intermediate frequency band between 10 MHz and 15 MHz ;
- the first intermediate frequency signal and the second intermediate frequency signal are in an intermediate frequency band that is at higher frequencies than the frequencies of the first pulse repetition frequency signal and of the second pulse repetition frequency signal;
- the frequency of the first intermediate frequency signal is so high that the first intermediate frequency signal cannot be used immediately as the first pulse repetition frequency signal;
- the frequency of the second intermediate frequency signal is so high that the second intermediate frequency signal cannot be used immediately as the second pulse repetition frequency signal.

6. Frequency generator as claimed in one of the Claims 1 to 5, **characterized by** at least one of the following:
- the first ceramic bandpass filter is designed to allow a selected frequency component of the first intermediate frequency signal to pass, filter out all the other frequency components of the first intermediate frequency signal and generate a bandpass-filtered first intermediate frequency signal;
- the second ceramic bandpass filter is designed to allow a selected frequency component of the second intermediate frequency signal to pass, filter out all the other frequency components of the second intermediate frequency signal and generate a bandpass-filtered second intermediate frequency signal;
- the first ceramic bandpass filter has a quality that enables it to selectively filter out a selected frequency component of the first intermediate frequency signal;
- the second ceramic bandpass filter has a quality that enables it to selectively filter out a selected frequency component of the second intermediate frequency signal.

7. Frequency generator as claimed in one of the Claims 1 to 6, **characterized by** at least one of the following:
- the first signal path comprises a first final frequency divider, which is arranged after the first ceramic bandpass filter and which is designed to divide the frequency of the bandpass-filtered first intermediate frequency signal, or of a signal derived therefrom, and to generate the first pulse repetition frequency signal;
- the second signal path comprises a second final frequency divider, which is arranged after the second ceramic bandpass filter and which is designed to divide the frequency of the bandpass-filtered second intermediate frequency signal, or of a signal derived therefrom, and to generate the second pulse repetition frequency signal.

8. Frequency generator designed to generate two pulse repetition frequency signals, whose frequencies are slightly different, for a radar measuring apparatus which functions according to the pulse correlation principle, wherein said frequency generator has the following elements:
an oscillator (600), which generates an oscillator signal,
a first signal path for generating a first pulse repetition frequency signal from the oscillator signal, and
a second signal path for generating a second pulse repetition frequency signal from the oscillator signal,
**characterized in that**
the first signal path comprises:
- a frequency divider (601) or a first DDS module that is designed to generate, based on the oscillator signal, a first frequency signal, which, in the case of the frequency divider (601) comprises a harmonic series or, in the case of the first DDS module, comprises a series of image frequency components,
- a first ceramic bandpass filter (602) that is designed to filter out a certain harmonic or a certain image frequency component of the first frequency signal and to generate a bandpass-filtered first intermediate frequency signal,
and **in that** the second signal path comprises:
- a second DDS module (605), which, based on the oscillator signal, is designed to generate a second frequency signal which differs from the first frequency signal by a predefined frequency offset, wherein the second frequency signal comprises a series of image frequency components
- a second ceramic bandpass filter (606), which is designed to filter out a certain image frequency component of the second frequency signal and to generate a bandpass-filtered second intermediate frequency signal.

9. Frequency generator as claimed in Claim 8, **characterized by** at least one of the following:
- the bandpass-filtered first intermediate frequency signal, or a signal derived therefrom, can be used as a first pulse repetition frequency signal for controlling a pulsed operation of a radar transmission oscillator of the radar measuring apparatus,
- the bandpass-filtered second intermediate frequency signal, or a signal derived therefrom, can be used as a second pulse repetition frequency signal for controlling a pulsed operation of a local oscillator of the radar measuring apparatus.

10. Radar measuring apparatus for a pulse correlation radar, comprising:
- a radar transmission path for sending a radar transmission signal which is pulse-modulated in accordance with a first pulse repetition frequency signal,
- a radar reception path for receiving and evaluating the radar transmission signal reflected at a target (104), wherein the radar reception signal comprises a reception mixer (105), which mixes the radar reception signal with a local oscillator signal which is pulse-modulated in accordance with a second pulse repetition frequency signal, and which generates a reception mixer output signal,
- a frequency generator as claimed in one of the Claims 1 to 9, which is designed to generate the first pulse repetition frequency signal for a radar transmission oscillator (101) and the second pulse repetition frequency signal for a local oscillator (107), and
- an evaluation unit (108), which is designed to determine a target distance based on the reception mixer output signal, or a signal derived therefrom.

11. Radar measuring apparatus as claimed in Claim 10, **characterized by** at least one of the following:
- the evaluation is designed to variably set the frequency difference between the first pulse repetition frequency signal and the second pulse repetition frequency signal depending on the environmental conditions and radar targets;
- the frequency difference between the first pulse repetition frequency signal and the second pulse repetition frequency signal specifies a correlation speed for the evaluation of the radar reception signal, wherein a lower frequency difference results in a correspondingly low correlation speed;
- the evaluation unit is designed to variably set the frequency difference between the first pulse repetition frequency signal and the second pulse repetition frequency signal depending on the distance of a radar target, wherein a lower frequency difference is set for radar targets further away than for closer radar targets;
- the evaluation unit is designed to variably set the frequency difference between the first pulse repetition frequency signal and the second pulse repetition frequency signal depending on the reflectivity of a radar target;
- the evaluation unit is designed to periodically tune the frequency difference depending on the distance of the radar target, wherein a lower frequency difference is set for radar targets that are further away than for radar targets that are closer.

12. Radar measuring apparatus as claimed in Claim 10 or Claim 11, **characterized by** at least one of the following:
- the radar measuring apparatus is a device for measuring distances;
- the radar measuring apparatus is a level transmitter which is designed to determine the level in a vessel;
- the radar measuring apparatus is a field device for process automation engineering.

13. A procedure for generating two repetition frequency signals, whose frequencies are slightly different, for a radar measuring apparatus which functions according to the pulse correlation principle, wherein said procedure comprises the following steps:
- generation of an oscillator signal;
**characterized by**
- generation of a first frequency signal based on the oscillator signal using a frequency divider (401) or a first DDS module;
- mixing of the first frequency signal, or a signal derived therefrom, to an intermediate frequency band and generation of a first intermediate frequency signal;
- filtering out of a selected frequency component of the first intermediate frequency signal using a first ceramic bandpass filter (405) and generation of a bandpass-filtered first intermediate frequency signal, wherein the bandpass-filtered first intermediate frequency signal, or a signal derived therefrom, can be used as the first pulse repetition frequency signal;
- generation of a second frequency signal based on the oscillator signal using a second DDS module, wherein the second frequency signal differs from the first frequency signal by a predefined frequency offset,
- mixing of the second frequency signal or a signal derived therefrom to an intermediate frequency band and generation of a second intermediate frequency signal;
- filtering out of a selected frequency component of the second intermediate frequency signal using a second ceramic bandpass filter (411), wherein the bandpass-filtered second intermediate frequency signal, or a signal derived therefrom, can be used as the second pulse repetition frequency signal.

14. A procedure for generating two pulse repetition frequency signals, whose frequencies are slightly different, for a radar measuring apparatus which functions according to the pulse correlation principle, wherein said procedure comprises the following steps:
- generation of an oscillator signal;
**characterized by**
- generation of a first frequency signal based on the oscillator signal using a frequency divider (601) or a first DDS module, wherein, in the case of the frequency divider (601), the first frequency signal comprises a harmonic series or, in the case of the first DDS module, comprises a series of image frequency components;
- filtering out of a certain harmonic or a certain image frequency component of the first intermediate frequency signal using a first ceramic bandpass filter (602) and generation of a bandpass-filtered first intermediate frequency signal, wherein the bandpass-filtered first intermediate frequency signal, or a signal derived therefrom, can be used as the first pulse repetition frequency signal;
- generation of a second frequency signal based on the oscillator signal using a second DDS module (605), wherein the second frequency signal differs from the first frequency signal by a predefined frequency offset, wherein the second frequency comprises a series of image frequency components;
- filtering out of a certain image frequency component of the second intermediate frequency signal using a second ceramic bandpass filter (606) and generation of a bandpass-filtered second intermediate frequency signal, wherein the bandpass-filtered second intermediate frequency signal, or a signal derived therefrom, can be used as a second pulse repetition frequency signal.

## Revendications

1. Générateur de fréquence destiné à la génération de deux signaux à fréquence de répétition d'impulsions, dont la fréquence est légèrement différente, pour un dispositif de mesure radar fonctionnant d'après le principe de la corrélation d'impulsions, le générateur de fréquence comprenant les éléments suivants :
un oscillateur (400), qui génère un signal d'oscillateur,
un premier trajet de signal destiné à générer un premier signal à fréquence de répétition d'impulsions à partir du signal d'oscillateur, et
un deuxième trajet de signal destiné à générer un deuxième signal à fréquence de répétition d'impulsions à partir du signal d'oscillateur,
**caractérisé**
**en ce que** le premier trajet de signal comprend :
- un diviseur de fréquence (401) ou un premier module DDS, lequel est conçu de telle sorte à générer un premier signal de fréquence à partir du signal d'oscillateur,
- un premier mélangeur (403), lequel est conçu de telle sorte à mélanger le premier signal de fréquence ou un signal dérivé de celui-ci à une bande de fréquence intermédiaire, et à générer un premier signal de fréquence intermédiaire,
- un premier filtre passe-bande (405) en céramique, lequel est conçu de telle sorte à éliminer par filtrage une composante de fréquence sélectionnée du premier signal de fréquence intermédiaire et à générer un premier signal de fréquence intermédiaire filtré en passe-bande,
et **en ce que** le deuxième trajet de signal comprend :
- un deuxième module DDS (408), lequel est conçu de telle sorte à générer à partir du signal d'oscillateur un deuxième signal de fréquence, qui se distingue du premier signal de fréquence par un décalage de fréquence prédéfini,
- un deuxième mélangeur (410), lequel est conçu de telle sorte à mélanger le deuxième signal de fréquence ou un signal dérivé de celui-ci à une bande de fréquence intermédiaire, et à générer un deuxième signal de fréquence intermédiaire,
- un deuxième filtre passe-bande (411) en céramique, lequel est conçu de telle sorte à éliminer par filtrage une composante de fréquence sélectionnée du deuxième signal de fréquence intermédiaire et à générer un deuxième signal de fréquence intermédiaire filtré en passe-bande.

2. Générateur de fréquence selon la revendication 1, **caractérisé par** au moins l'un des points suivants :
- le premier signal de fréquence intermédiaire filtré en passe-bande ou un signal dérivé de celui-ci est utilisable en tant que premier signal à fréquence de répétition d'impulsions pour la commande d'un mode pulsé d'un oscillateur d'émission radar du dispositif de mesure radar ;
- le deuxième signal de fréquence intermédiaire filtré en passe-bande ou un signal dérivé de celui-ci est utilisable en tant que deuxième signal à fréquence de répétition d'impulsions pour la commande d'un mode pulsé d'un oscillateur local du dispositif de mesure radar.

3. Générateur de fréquence selon la revendication 1 ou 2, **caractérisé par** au moins l'un des points suivants :
- la fréquence du signal d'oscillateur se situe sous 100 MHz ;
- la fréquence du signal d'oscillateur se situe dans la plage de 1 MHz à 100 MHz ;
- le rapport de fréquence entre le premier signal de fréquence et le signal d'oscillateur est inférieur à 1:10 ;
- le rapport de fréquence entre le deuxième signal de fréquence généré par le deuxième module DDS et le signal d'oscillateur est inférieur à 1:10 ;
- le premier signal de fréquence et le deuxième signal de fréquence présentent chacun une fréquence comprise entre 100 kHz et 1 MHz ;
- le décalage de fréquence entre le premier signal de fréquence et le deuxième signal de fréquence est réglable de façon variable au moyen du deuxième module DDS ;
- le décalage de fréquence entre le premier signal de fréquence et le deuxième signal de fréquence est réglable de façon variable en fonction des conditions de réception et des cibles radar au moyen du deuxième module DDS ;
- le décalage de fréquence entre le premier signal de fréquence et le deuxième signal de fréquence se situe dans la plage comprise entre 5 Hz et quelques centaines de Hz ;
- le premier signal de fréquence présente une fréquence qui est tellement basse que le premier signal de fréquence n'est pas utilisable directement comme premier signal à fréquence de répétition d'impulsions ;
- le deuxième signal de fréquence présente une fréquence qui est tellement basse que le deuxième signal de fréquence n'est pas utilisable directement comme deuxième signal à fréquence de répétition d'impulsions ;
- le premier signal à fréquence de répétition d'impulsions présente une fréquence comprise entre 1 MHz et 5 MHz ;
- le deuxième signal à fréquence de répétition d'impulsions présente une fréquence comprise entre 1 MHz et 5 MHz.

4. Générateur de fréquence selon l'une des revendications 1 à 3, **caractérisé par** au moins l'un des points suivants :
- le premier trajet de signal comprend un filtre passe-bas, disposé entre le diviseur de fréquence ou le premier module DDS et le premier mélangeur, et conçu de telle sorte à supprimer les composantes parasites haute fréquence du premier signal de fréquence et à générer un premier signal de fréquence filtré en passe-bas ;
- le deuxième trajet de signal comprend un filtre passe-bas, disposé entre le module DDS et le deuxième mélangeur, et conçu de telle sorte à supprimer les composantes parasites haute fréquence du deuxième signal de fréquence et à générer un deuxième signal de fréquence filtré en passe-bas.

5. Générateur de fréquence selon l'une des revendications 1 à 4, **caractérisé par** au moins l'un des points suivants :
- le premier signal de fréquence intermédiaire et le deuxième signal de fréquence intermédiaire se situent dans une bande de fréquence intermédiaire, pour laquelle sont disponibles des filtres passe-bande céramiques avec un facteur de qualité élevé ;
- le premier signal de fréquence intermédiaire et le deuxième signal de fréquence intermédiaire se situent dans une bande de fréquence intermédiaire comprise entre 10 MHz et 15 MHz ;
- le premier signal de fréquence intermédiaire et le deuxième signal de fréquence intermédiaire se situent dans une bande de fréquence intermédiaire, qui se situe à des fréquences supérieures aux fréquences du premier signal à fréquence de répétition d'impulsions et du deuxième signal à fréquence de répétition d'impulsions ;
- la fréquence du premier signal de fréquence intermédiaire est si élevée que le premier signal de fréquence intermédiaire n'est pas utilisable directement comme premier signal à fréquence de répétition d'impulsions ;
- la fréquence du deuxième signal de fréquence intermédiaire est si élevée que le deuxième signal de fréquence intermédiaire n'est pas utilisable directement comme deuxième signal à fréquence de répétition d'impulsions.

6. Générateur de fréquence selon l'une des revendications 1 à 5, **caractérisé par** au moins l'un des points suivants :
- le premier filtre passe-bande en céramique est conçu de telle sorte à laisser passer une composante de fréquence sélectionnée du premier signal de fréquence intermédiaire, à éliminer par filtrage toutes les autres composantes de fréquence du premier signal de fréquence intermédiaire et à générer un premier signal de fréquence intermédiaire filtré en passe-bande ;
- le deuxième filtre passe-bande en céramique est conçu de telle sorte à laisser passer une composante de fréquence sélectionnée du deuxième signal de fréquence intermédiaire, à éliminer par filtrage toutes les autres composantes de fréquence du deuxième signal de fréquence intermédiaire et à générer un deuxième signal de fréquence intermédiaire filtré en passe-bande ;
- le premier filtre passe-bande présente un facteur de qualité permettant d'éliminer par filtrage, de façon sélective, une composante de fréquence sélectionnée du premier signal de fréquence intermédiaire ;
- le deuxième filtre passe-bande présente un facteur de qualité permettant d'éliminer par filtrage, de façon sélective, une composante de fréquence sélectionnée du deuxième signal de fréquence intermédiaire.

7. Générateur de fréquence selon l'une des revendications 1 à 6, **caractérisé par** au moins l'un des points suivants :
- le premier trajet de signal comprend un premier diviseur de fréquence final, disposé en aval du premier filtre passe-bande en céramique et conçu de telle sorte à diviser la fréquence du premier signal de fréquence intermédiaire filtré en passe-bande, ou un signal dérivé de celui-ci, et à générer le premier signal à fréquence de répétition d'impulsions ;
- le deuxième trajet de signal comprend un deuxième diviseur de fréquence final, disposé en aval du deuxième filtre passe-bande en céramique et conçu de telle sorte à diviser la fréquence du deuxième signal de fréquence intermédiaire filtré en passe-bande, ou un signal dérivé de celui-ci, et à générer le deuxième signal à fréquence de répétition d'impulsions.

8. Générateur de fréquence destiné à la génération de deux signaux à fréquence de répétition d'impulsions, dont la fréquence est légèrement différente, pour un dispositif de mesure radar fonctionnant d'après le principe de la corrélation d'impulsions, le générateur de fréquence comprenant les éléments suivants :
un oscillateur (600), qui génère un signal d'oscillateur,
un premier trajet de signal destiné à générer un premier signal à fréquence de répétition d'impulsions à partir du signal d'oscillateur, et
un deuxième trajet de signal destiné à générer un deuxième signal à fréquence de répétition d'impulsions à partir du signal d'oscillateur,
**caractérisé**
**en ce que** le premier trajet de signal comprend :
- un diviseur de fréquence (601) ou un premier module DDS, lequel est conçu de telle sorte à générer un premier signal de fréquence à partir du signal d'oscillateur, lequel signal comprend, dans le cas du diviseur de fréquence (601), une série d'harmoniques ou, dans le cas du premier module DDS, une série de composantes de fréquence-image,
- un premier filtre passe-bas (602) en céramique, lequel est conçu de telle sorte à éliminer par filtrage un harmonique déterminé ou une composante de fréquence-image déterminée du premier signal de fréquence et à générer un premier signal de fréquence intermédiaire filtré en passe-bande,
et **en ce que** le deuxième trajet de signal comprend :
- un deuxième module DDS (605), lequel est conçu de telle sorte à générer à partir du signal d'oscillateur un deuxième signal de fréquence, qui se distingue du premier signal de fréquence par un décalage de fréquence prédéfini, le deuxième signal de fréquence comprenant une série de composantes de fréquence-image,
- un deuxième filtre passe-bas (606) en céramique, lequel est conçu de telle sorte à éliminer par filtrage une composante de fréquence-image déterminée du deuxième signal de fréquence et à générer un deuxième signal de fréquence intermédiaire filtré en passe-bande.

9. Générateur de fréquence selon la revendication 8, **caractérisé par** au moins l'un des points suivants :
- le premier signal de fréquence intermédiaire filtré en passe-bande ou un signal dérivé de celui-ci est utilisable comme premier signal à fréquence de répétition d'impulsions pour la commande d'un mode pulsé d'un oscillateur d'émission radar du dispositif de mesure radar,
- le deuxième signal de fréquence intermédiaire filtré en passe-bande ou un signal dérivé de celui-ci est utilisable comme deuxième signal à fréquence de répétition d'impulsions pour la commande d'un mode pulsé d'un oscillateur local du dispositif de mesure radar.

10. Dispositif de mesure radar destiné au radar à corrélation d'impulsions, lequel comporte :
- un trajet d'émission radar destiné à l'envoi d'un signal d'émission radar, lequel est modulé par impulsions selon un premier signal à fréquence de répétition d'impulsions,
- un trajet de réception radar destiné à la réception et à l'évaluation du signal d'émission radar réfléchi sur une cible (104), le circuit de réception radar comprenant un mélangeur de réception (105), qui mélange le signal de réception radar avec un signal d'oscillateur local, lequel signal est modulé par impulsions selon un deuxième signal à fréquence de répétition d'impulsions, et qui génère un signal de sortie de mélangeur de réception,
- un générateur de fréquence selon l'une des revendications 1 à 9, lequel est conçu de telle sorte à générer le premier signal à fréquence de répétition d'impulsions pour un oscillateur d'émission radar (101) et le deuxième signal à fréquence de répétition d'impulsions pour un oscillateur local (107), et
- une unité d'évaluation (108), laquelle est conçue de telle sorte à déterminer, à partir du signal de sortie du mélangeur de réception ou à partir d'un signal dérivé de celui-ci, une distance de la cible.

11. Dispositif de mesure radar selon la revendication 10, **caractérisé par** au moins l'un des points suivants :
- l'unité d'évaluation est conçue de telle sorte à régler de façon variable la différence de fréquence entre le premier signal à fréquence de répétition d'impulsions et le deuxième signal à fréquence de répétition d'impulsions en fonction des conditions ambiantes et des cibles radar ;
- la différence de fréquence entre le premier signal à fréquence de répétition d'impulsions et le deuxième signal à fréquence de répétition d'impulsions détermine une vitesse de corrélation pour l'évaluation du signal de réception radar, une différence de fréquence faible entraînant en conséquence une vitesse de corrélation faible ;
- l'unité d'évaluation est conçue de telle sorte à régler de façon variable la différence de fréquence entre le premier signal à fréquence de répétition d'impulsions et le deuxième signal à fréquence de répétition d'impulsions en fonction de la distance d'une cible radar, une différence de fréquence inférieure étant réglée pour des cibles radar plus éloignées que pour des cibles radar moins éloignées ;
- l'unité d'évaluation est conçue de telle sorte à régler de façon variable la différence de fréquence entre le premier signal à fréquence de répétition d'impulsions et le deuxième signal à fréquence de répétition d'impulsions en fonction de la réflectivité d'une cible radar ;
- l'unité d'évaluation est conçue de telle sorte à ajuster périodiquement la différence de fréquence en fonction de la distance de la cible radar, une différence de fréquence inférieure étant réglée pour des cibles radar plus éloignées que pour des cibles radar moins éloignées.

12. Dispositif de mesure radar selon la revendication 10 ou 11, **caractérisé par** au moins l'un des poins suivants :
- concernant le dispositif de mesure radar, il s'agit d'un appareil destiné à la mesure de distance ;
- concernant le dispositif de mesure radar, il s'agit d'un appareil destiné à la mesure de niveau, lequel est conçu de telle sorte à déterminer le niveau dans un réservoir ;
- concernant le dispositif de mesure radar, il s'agit d'un appareil de terrain pour la technique d'automatisation des process.

13. Procédé destiné à la génération de deux signaux à fréquence de répétition d'impulsions, dont la fréquence est légèrement différente, pour un dispositif de mesure radar fonctionnant d'après le principe de la corrélation d'impulsions, le procédé comprenant les étapes suivantes :
- génération d'un signal d'oscillateur ;
- génération d'un premier signal de fréquence à partir du signal d'oscillateur au moyen d'un diviseur de fréquence (401) ou d'un premier module DDS ;
- mélange du premier signal de fréquence ou d'un signal dérivé de celui-ci à une bande de fréquence intermédiaire et génération d'un premier signal de fréquence intermédiaire ;
- élimination par filtrage d'une composante de fréquence sélectionnée du premier signal de fréquence intermédiaire au moyen d'un premier filtre passe-bande (405) en céramique et génération d'un premier signal de fréquence intermédiaire filtré en passe-bande, le premier signal de fréquence intermédiaire filtré en passe-bande ou un signal dérivé de celui-ci étant utilisable comme premier signal à fréquence de répétition d'impulsions ;
- Génération d'un deuxième signal de fréquence à partir du signal d'oscillateur au moyen d'un deuxième module DDS, le deuxième signal de fréquence se distinguant du premier signal de fréquence par un décalage de fréquence prédéfini,
- mélange du deuxième signal de fréquence ou d'un signal dérivé de celui-ci à une bande de fréquence intermédiaire et génération d'un deuxième signal de fréquence intermédiaire ;
- élimination par filtrage d'une composante de fréquence sélectionnée du deuxième signal de fréquence intermédiaire au moyen d'un deuxième filtre passe-bande (411) en céramique et génération d'un deuxième signal de fréquence intermédiaire filtré en passe-bande, le deuxième signal de fréquence intermédiaire filtré en passe-bande ou un signal dérivé de celui-ci étant utilisable comme deuxième signal à fréquence de répétition d'impulsions.

14. Procédé destiné à la génération de deux signaux à fréquence de répétition d'impulsions, dont la fréquence est légèrement différente, pour un dispositif de mesure radar fonctionnant d'après le principe de la corrélation d'impulsions, le procédé comprenant les étapes suivantes :
- génération d'un signal d'oscillateur ;
- génération d'un premier signal de fréquence à partir du signal d'oscillateur au moyen d'un diviseur de fréquence (601) ou d'un premier module DDS, le premier signal de fréquence comprenant, dans le cas du diviseur de fréquence (601), une série d'harmoniques ou, dans le cas du premier module DDS, une série de composantes de fréquence-image ;
- élimination par filtrage d'un harmonique déterminé ou d'une composante de fréquence-image déterminée du premier signal de fréquence intermédiaire au moyen d'un premier filtre passe-bande (602) en céramique et génération d'un premier signal de fréquence intermédiaire filtré en passe-bande, le premier signal de fréquence intermédiaire filtré en passe-bande ou un signal dérivé de celui-ci étant utilisable comme premier signal à fréquence de répétition d'impulsions ;
- génération d'un deuxième signal de fréquence à partir du signal d'oscillateur au moyen d'un deuxième module DDS (605), le deuxième signal de fréquence se distinguant du premier signal de fréquence par un décalage de fréquence prédéfini, le deuxième signal de fréquence comprenant une série de composantes de fréquence-image ;
- élimination par filtrage d'une composante de fréquence-image déterminée du deuxième signal de fréquence intermédiaire au moyen d'un deuxième filtre passe-bande (606) en céramique et génération d'un deuxième signal de fréquence intermédiaire filtré en passe-bande, le deuxième signal de fréquence intermédiaire filtré en passe-bande ou un signal dérivé de celui-ci étant utilisable comme deuxième signal à fréquence de répétition d'impulsions.
